# EUROPEAN PATENT APPLICATION

(11) **EP 4 708 858 A1**
(43) Date of publication of application: **11.03.2026**
(21) Application number: 24814559.1
(22) Date of filing: 30.05.2024
(51) Int. Cl.: H04N 19/172, H04N 21/2662

(54) **VIDEO PROCESSING METHOD AND APPARATUS, AND ELECTRONIC DEVICE AND STORAGE MEDIUM**

(30) Priority: 31.05.2023 CN 202310633415
(71) Applicant: Douyin Vision Co., Ltd., Beijing 100041 (CN)
(72) Inventor: CHEN, Cheng, Beijing 100028 (CN); SHI, Shu, Los Angeles California 90066 (US)
(74) Representative: Marks & Clerk LLP
(86) International application number: PCT/CN2024/096467
(87) International publication number: WO 2024/245363

(57) **Abstract**

Embodiments of the present disclosure provide a video processing method and apparatus, an electronic device, and a storage medium. The method includes: generating a first video stream and a second video stream based on a video captured by a first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream.

## Description

The present application claims priority to Chinese Patent Application No. 202310633415.1, filed with the China National Intellectual Property Administration on May 31, 2023, and entitled "VIDEO PROCESSING METHOD AND APPARATUS, ELECTRONIC DEVICE, AND STORAGE MEDIUM", which is incorporated herein by reference in its entirety.

### FIELD

The present disclosure relates to the field of communication, and in particular, to a video processing method and apparatus, an electronic device, and a storage medium.

### BACKGROUND

In a live streaming scene, when a viewer enters a live streaming room, a server pushes live streaming pictures to a terminal device of the viewer. A video stream in which the live streaming pictures are located includes one or more groups of pictures (GOPs), with a first frame of each GOP being an intra coded picture (I-frame).

During pushing, to ensure that the terminal device of the viewer can properly decode and play the live streaming pictures, the server needs to start pushing the live streaming pictures to the terminal device from a first frame (namely, an I-frame) of a GOP in which a current live streaming picture is located when the viewer enters the live streaming room. When a GOP length is large, starting pushing the live streaming pictures to the terminal device from the first frame of the GOP in which the current live streaming picture is located when the viewer enters the live streaming room results in a large delay in the live streaming pictures. For example, a GOP length is 50 frames, and time when the viewer enters the live streaming room corresponds to a 40^{th} frame of a current GOP. To ensure that the terminal device can perform decoding normally, the server needs to push live streaming pictures from a first video frame to the 40^{th} video frame of the current GOP to the terminal device, resulting in introduction of a delay of 39 video frames. Based on this, the prior art proposes that two video streams can be coded, and each video stream has a complete GOP structure and can be decoded and played to obtain live streaming pictures. A GOP length of the first video stream is greater than a GOP length of the second video stream. When the viewer enters the live streaming room, the second video stream is first pushed to the viewer, the shorter GOP length is used to reduce a delay of the live streaming picture, and the second video stream is subsequently switched to the first video stream to continue to push the live streaming picture to the viewer.

However, by pushing the live streaming pictures to the viewer through the two video streams, coding of the second video stream with a complete GOP structure may result in large coding resource consumption, increasing a video code rate at the time of delivery, increasing a live streaming delay, and affecting the viewer's experience of watching the live stream.

### SUMMARY

Embodiments of the present disclosure provide a video processing method and apparatus, an electronic device, and a storage medium, to solve one or more of the above technical problems.

According to a first aspect, an embodiment of the present disclosure provides a video processing method, including:
generating, by a first terminal device, a first video stream and a second video stream based on a video captured by the first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream; and
sending the first video stream and the second video stream to a server.

According to a second aspect, an embodiment of the present disclosure provides a video processing method, including:
generating a first video stream and a second video stream based on a video captured by a first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream.

According to a third aspect, an embodiment of the present disclosure provides a video processing method, including:
sending a live streaming data push request to a server;
receiving a target IP frame group and a target playback stream from the server, where the target IP frame group is an IP frame group in a second video stream, where the decode time stamp DTS of the IP frame group is before reception time of the live streaming data push request, and a time interval between the DTS and the reception time is within preset duration; and the target playback stream includes video frames in a first video stream that are located after a last predictive coded picture P-frame in the target IP frame group and that start from a P-frame; and
decoding the target IP frame group and the target playback stream.

According to a fourth aspect, an embodiment of the present disclosure provides a video processing apparatus, including:
a first generation unit configured to generate, by a first terminal device, a first video stream and a second video stream based on a video captured by the first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream; and
a first sending unit configured to send the first video stream and the second video stream to a server.

According to a fifth aspect, an embodiment of the present disclosure provides a video processing apparatus, including:
a second generation unit configured to generate a first video stream and a second video stream based on a video captured by a first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream.

According to a sixth aspect, an embodiment of the present disclosure provides a video processing apparatus, including:
a request sending unit configured to send a live streaming data push request to a server;
a data receiving unit configured to receive a target IP frame group and a target playback stream from the server, where the target IP frame group is an IP frame group in a second video stream, where the decode time stamp DTS of the IP frame group is before reception time of the live streaming data push request, and a time interval between the DTS and the reception time is within preset duration; and the target playback stream includes video frames in a first video stream that are located after a last predictive coded picture P-frame in the target IP frame group and that start from a P-frame; and
a data decoding unit configured to decode the target IP frame group and the target playback stream.

According to a seventh aspect, an embodiment of the present disclosure provides an electronic device, including: a processor; and a memory configured to store computer-executable instructions that, when executed, cause the processor to implement the steps of the method according to the first aspect.

According to an eighth aspect, an embodiment of the present disclosure provides an electronic device, including: a processor; and a memory configured to store computer-executable instructions that, when executed, cause the processor to implement the steps of the method according to the second aspect.

According to a ninth aspect, an embodiment of the present disclosure provides an electronic device, including: a processor; and a memory configured to store computer-executable instructions that, when executed, cause the processor to implement the steps of the method according to the third aspect.

According to a tenth aspect, an embodiment of the present disclosure provides a computer-readable storage medium for storing computer-executable instructions that, when executed by a processor, cause the steps of the method according to the first aspect to be implemented.

According to an eleventh aspect, an embodiment of the present disclosure provides a computer-readable storage medium for storing computer-executable instructions that, when executed by a processor, cause the steps of the method according to the second aspect to be implemented.

According to a twelfth aspect, an embodiment of the present disclosure provides a computer-readable storage medium for storing computer-executable instructions that, when executed by a processor, cause the steps of the method according to the third aspect to be implemented.

In one or more embodiments of the present disclosure, the first video stream and the second video stream can be generated, the first video stream includes a plurality of consecutive GOPs, the second video stream includes a plurality of intra coded picture and predictive coded picture IP frame groups spaced apart at an interval of a specific number of video frames, each GOP of the first video stream is corresponding to one or more IP frame groups of the second video stream, each IP frame group includes an intra coded picture I-frame and a predictive coded picture P-frame after the I-frame, each video frame in each IP frame group has same picture content as a video frame in the first video stream that has decode time stamp DTS, and a number of P-frames included in each IP frame group is the same as a number of reference frames for P-frames in the first video stream. Because the IP frame groups in the second video stream are spaced apart at an interval of a specific number of video frames, the second video stream is not a complete video stream. Therefore, during video distribution, coding and delivering the second video stream can reduce coding resource consumption, reduce a delivered video code rate, and reduce a delay of pushing a live streaming picture to a terminal device, thereby ensuring real-time performance of live streaming.

### BRIEF DESCRIPTION OF THE DRAWINGS

In order to more clearly describe the technical solutions in the one or more embodiments of the present disclosure or in the prior art, the accompanying drawings for describing the embodiments or the prior art will be briefly described below. Apparently, the accompanying drawings in the description below show merely some embodiments recited in the present disclosure, and those of ordinary skill in the art may still derive other accompanying drawings from these accompanying drawings without creative efforts.
FIG. 1 is a schematic diagram of the prior art according to an embodiment of the present disclosure;
FIG. 2 is a schematic diagram of a scenario of a video processing method according to an embodiment of the present disclosure;
FIG. 3 is a schematic flowchart of a video processing method according to an embodiment of the present disclosure;
FIG. 4a is a schematic diagram of a first video stream and a second video stream according to an embodiment of the present disclosure;
FIG. 4b is a schematic diagram of a first video stream and a second video stream according to another embodiment of the present disclosure;
FIG. 4c is a schematic diagram of a first video stream and a second video stream according to still another embodiment of the present disclosure;
FIG. 4d is a schematic diagram of a first video stream and a second video stream according to still another embodiment of the present disclosure;
FIG. 5 is a schematic flowchart of a video processing method according to another embodiment of the present disclosure;
FIG. 6 is a schematic flowchart of a video processing method according to still another embodiment of the present disclosure;
FIG. 7a is a schematic diagram of pushing a first video stream and a second video stream according to an embodiment of the present disclosure;
FIG. 7b is a schematic diagram of pushing a first video stream and a second video stream according to another embodiment of the present disclosure;
FIG. 7c is a schematic diagram of pushing a first video stream and a second video stream according to still another embodiment of the present disclosure;
FIG. 7d is a schematic diagram of pushing a first video stream and a second video stream according to still another embodiment of the present disclosure;
FIG. 8 is a schematic flowchart of a video processing method according to still another embodiment of the present disclosure;
FIG. 9 is a schematic structural diagram of a video processing apparatus according to an embodiment of the present disclosure;
FIG. 10 is a schematic structural diagram of a video processing apparatus according to another embodiment of the present disclosure;
FIG. 11 is a schematic structural diagram of a video processing apparatus according to still another embodiment of the present disclosure; and
FIG. 12 is a schematic structural diagram of an electronic device according to an embodiment of the present disclosure.

### DETAILED DESCRIPTION OF EMBODIMENTS

In order to make those skilled in the art better understand the technical solutions in the one or more embodiments of the present disclosure, the technical solutions in the one or more embodiments of the present disclosure will be clearly and completely described below with reference to the accompanying drawings in the one or more embodiments of the present disclosure. Apparently, the described embodiments are merely some rather than all of the embodiments of the present disclosure. All other embodiments obtained by those of ordinary skill in the art based on the one or more embodiments of the present disclosure without creative efforts shall fall within the scope of protection of the present disclosure.

Embodiments of the present disclosure provide a video processing method. To facilitate understanding of various embodiments of the present disclosure, the technical terms involved in the various embodiments of the present disclosure are first explained herein.

In video coding and decoding, video frames are usually divided into I, P, and B types:
An intra coded picture (I frame) is an independent frame with full information, and can be decoded independently without reference to another video frame.

A predictive coded picture (P frame) can be decoded only with reference to a previous I-frame, and a difference/residual between a current video frame and a previously referenced I-frame (a number of reference frames is greater than or equal to 1) is coded. A difference/residual of the current frame needs to be superimposed on a previously buffered video frame during decoding to generate a final picture. The P-frame has a smaller data amount compared to the I-frame.

A bidirectionally predictive coded picture (B-frame) is a bidirectionally predictively coded frame, that is, the B-frame records differences/residuals between the current frame and frames before and after the current frame. When a B-frame is being decoded, not only a previously buffered frame needs to be obtained, but also a subsequent frame needs to be decoded. A final picture is generated by superimposing data of the previous and subsequent frames with data of the current frame. A B-frame has a smallest data amount, but requires high decoding performance.

A group of pictures (GOP) refers to a group of consecutive video frames formed by I/P/B-frames. In a GOP, to ensure that a subsequent frame can be decoded and played, the first video frame is definitely an I-frame. A GOP length refers to a number of frames between two adjacent I-frames. During video coding, the GOP length is an important parameter, which affects a video code rate after coding. When the GOP length is increased, a number of I-frames in a video is correspondingly reduced, a video coding compression rate is increased, and the video code rate after coding is correspondingly reduced.

A decode time stamp (DTS) is a time stamp used to indicate time when a player decodes a video frame.

A presentation time stamp (PTS) is a time stamp used to indicate time when a player plays a video frame.

When there is no B-frame in a video stream, a DTS and a PTS are equal for each frame, that is, a decoding order is the same as a presentation order. When there is a B-frame in a video stream, a DTS and a PTS may be different for each frame because the B-frame needs to be decoded with reference to previous and subsequent frames.

For example, for a group of video streams whose presentation order is I, B, B, P, B, B, P, the B-frame needs to reference to the I-frame and the P-frame before and after the B-frame or reference to the P-frames before and after the B-frame for decoding, so that a decoding order and a playback order of this group of video streams may be shown in Table 1 below.

**Table 1**

| | I | B | B | P | B | B | P |
|---|---|---|---|---|---|---|---|
| Decoding order | 1 | 3 | 4 | 2 | 6 | 7 | 5 |
| Presentation order | 1 | 2 | 3 | 4 | 5 | 6 | 7 |

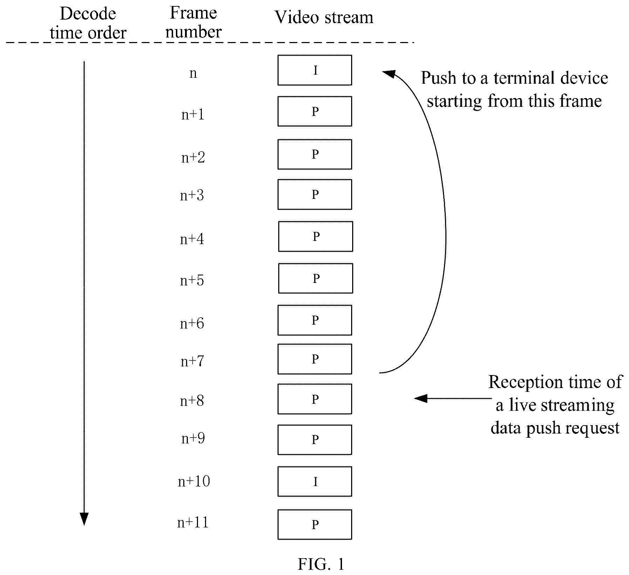

FIG. 1 is a schematic diagram of the prior art according to an embodiment of the present disclosure. In FIG. 1, n is a positive integer greater than or equal to 0, and video frames are arranged in an order of DTSs. As shown in FIG. 1, in a live streaming scene, a group of video streams have a GOP length of 10, and one GOP includes one I-frame and nine P-frames. When time at which a server receives a live streaming data push request from a terminal device is corresponding to a P-frame with a frame number n+8, because the P-frame cannot be decoded independently, a live streaming picture is pushed to the terminal device starting from an I-frame with a frame number n, thereby introducing a multi-frame delay of the live streaming picture. In addition, in the solution of the prior art, live streaming pictures are pushed based on two video streams with a complete GOP structure, which results in large coding resource consumption, increasing a video code rate at the time of delivering the video frame, increasing a live streaming delay, and affecting a viewer's experience of watching live streaming.

Based on this, embodiments of the present disclosure provide a video processing method to solve one or more of the above technical problems.

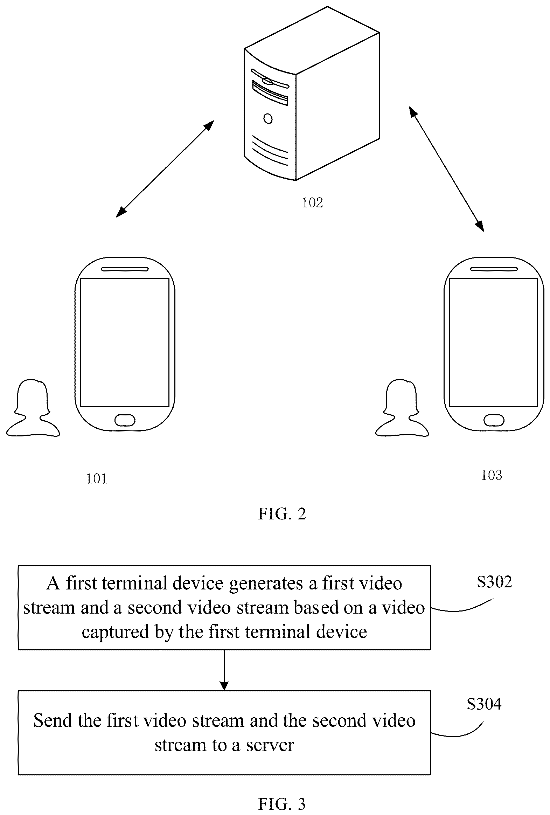

FIG. 2 is a schematic diagram of a scenario of a video processing method according to an embodiment of the present disclosure. As shown in FIG. 2, the scenario includes a streamer-side terminal device 101, a server 102, and a viewer-side terminal device 103. The streamer-side terminal device interacts with the server during live streaming, and pushes a live streaming picture to the viewer-side terminal device. In this embodiment, the streamer-side terminal device and the viewer-side terminal device may both include an electronic device that has a function of displaying a live streaming picture, such as a mobile phone, a computer, a tablet computer, an in-vehicle computer, or a wearable device. The server may be an independent server or a server cluster.

FIG. 3 is a schematic flowchart of a video processing method according to an embodiment of the present disclosure. The method may be performed by a first terminal device, and the first terminal device may be a streamer-side terminal device. As shown in FIG. 3, the procedure includes:
Step S302: The first terminal device generates a first video stream and a second video stream based on a video captured by the first terminal device, where the first video stream includes a plurality of consecutive GOPs, and the second video stream includes a plurality of IP frame groups spaced apart at an interval of a specific number of video frames; each GOP of the first video stream corresponds to one or more IP frame groups of the second video stream; each IP frame group including an I-frame and a P-frame after the I-frame; each video frame in each IP frame group has same picture content as a video frame in the first video stream that has a same DTS; and a number of the P-frames included in each IP frame group is the same as a number of reference frames for P-frames in the first video stream.
Step S304: Send the first video stream and the second video stream to a server.

In this embodiment, the first video stream and the second video stream can be generated, the first video stream includes a plurality of consecutive GOPs, the second video stream includes a plurality of intra coded picture and predictive coded picture IP frame groups spaced apart at an interval of a specific number of video frames, each GOP of the first video stream is corresponding to one or more IP frame groups of the second video stream, each IP frame group includes an intra coded picture I-frame and a predictive coded picture P-frame after the I-frame, each video frame in each IP frame group has same picture content as a video frame in the first video stream that has DTS, and a number of P-frames included in each IP frame group is the same as a number of reference frames for P-frames in the first video stream. Because the IP frame groups in the second video stream are spaced apart at an interval of a specific number of video frames, the second video stream is not a complete video stream. Therefore, during video distribution, coding and delivering the second video stream can reduce coding resource consumption, reduce a delivered video code rate, and reduce a delay of pushing a live streaming picture to a terminal device, thereby ensuring real-time performance of live streaming.

In step S302, the first terminal device, such as a streamer-side terminal device, records a live streaming process of a streamer through a camera to obtain a video, and generates the first video stream and the second video stream based on the shot video. The first video stream is a video stream coded according to a coding and decoding standard, including but not limited to any coding standard such as H.264 and H.265, and a GOP size of the first video stream may be set according to requirements. In the first video stream and the second video stream, because the first video stream has a plurality of consecutive GOPs and the second video stream does not have consecutive GOPs, only the first video stream can be played normally.

The second video stream includes a plurality of IP frame groups spaced apart at an interval of a specific number of video frames, and each IP frame group includes one I-frame and one or more P-frames after the I-frame. Because the IP frame groups are inconsecutive, the second video stream formed by the IP frame groups is not a continuous video stream. Therefore, the second video stream cannot be played normally if the second video stream is separate from the first video stream.

In an embodiment, the specific number has a plurality of values, the specific number has different values between different IP frame groups in the second video stream, and a plurality of particular quantities are set to achieve different intervals of the second video stream. For example, for the first IP frame group and the second IP frame group of the second video stream, the two IP frame groups are spaced apart at an interval of 5 video frames, and for the second IP frame group and the third IP frame group of the second video stream, the two IP frame groups are spaced apart at an interval of 10 video frames. A specific value of the specific number may be flexibly configured according to requirements.

In the first video stream and the second video stream, each GOP of the first video stream corresponds to one or more IP frame groups of the second video stream. Each video frame in each IP frame group has same picture content as a video frame in the first video stream that has DTS. In addition, a number of P-frames included in each IP frame group is the same as a number of reference frames for P-frames in the first video stream.

In an embodiment, when the first video stream does not include a B-frame, the I-frame in the IP frame group has same picture content as a P-frame in the first video stream that has DTS, the P-frame in the IP frame group has same picture content as a P-frame in the first video stream that has DTS, and all video frames in the IP frame group are arranged consecutively.

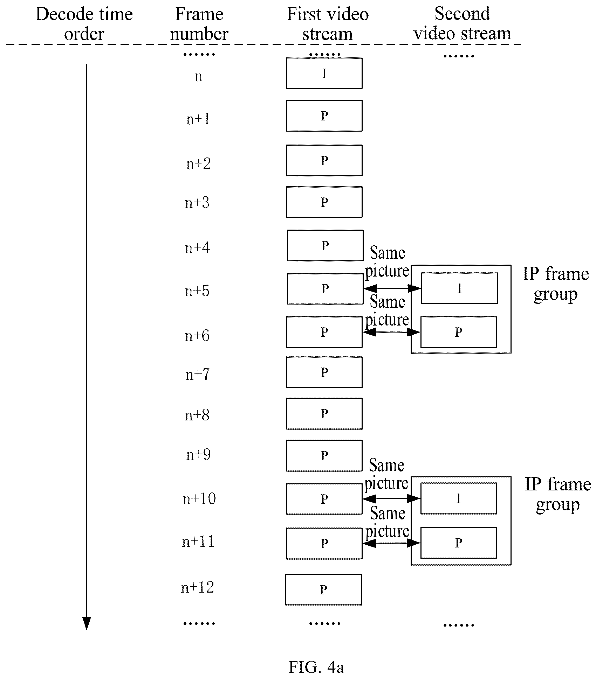

FIG. 4a is a schematic diagram of a first video stream and a second video stream according to an embodiment of the present disclosure. Because video frames usually need to be decoded in a decoding order of the video frames, an order of DTSs is used as an example in FIG. 4a to illustrate the first video stream and the second video stream. In FIG. 4a, n is a positive integer greater than or equal to 0, and the video frames are arranged in the order of DTSs. The first video stream includes a plurality of consecutive GOPs and has a long GOP length, and one GOP includes one I-frame and a plurality of P-frames. In the order of DTSs, the second video stream includes a plurality of IP frame groups spaced apart at an interval of a specific number of video frames, one IP frame group may include one I-frame and one or more P-frames, and a number of P-frames is determined by a number of reference frames for P-frames in the first video stream. For example, if a number of video frames that need to be referenced when the P-frames in the first video stream are coded and decoded is 1, one IP frame group may include one I-frame and one P-frame. For another example, if the number of video frames that need to be referenced when the P-frames in the first video stream are coded and decoded is 2, one IP frame group may include one I-frame and two P-frames.

As shown in FIG. 4a, when the first video stream does not include a B-frame, a video frame in the IP frame group has a same DTS as a corresponding video frame in the first video stream, and picture content obtained through decoding is also the same. Specifically, the I-frame in the IP frame group has same picture content as a P-frame in the first video stream that has DTS, and the P-frame in the IP frame group has same picture content as a P-frame in the first video stream that has DTS. All video frames in the IP frame group are arranged consecutively. As can be seen from FIG. 4a, the second video stream is not a complete video stream, but only a plurality of video clips. Therefore, the second video stream cannot be normally played, a video code rate of the second video stream is low, and efficiency of obtaining the second video stream through coding is high.

It can be learned that in this embodiment, when the first video stream does not include a B-frame, the IP frame group can be obtained through coding. It can be learned from a structure of the IP frame group that a manner of obtaining the IP frame group through coding is simple, and coding efficiency is high. An I-frame in the IP frame group is set to have same picture content as a P-frame in the first video stream that has DTS, and a P-frame in the IP frame group is set to have same picture content as a P-frame in the first video stream that has DTS, which can ensure that when the video frames in the first video stream and the second video stream are delivered to a terminal device of a live streaming viewer, the video frames can be correctly decoded and played.

It is worth mentioning that the second video stream is the same as the first video stream in terms of a reference frame configuration for coding and decoding. The reference frame configuration includes at least a number of reference frames for P-frames. For example, if the P-frame in the first video stream is coded and decoded with reference to a previous frame, the P-frame in the second video stream is also coded and decoded with reference to a previous frame. In FIG. 4a, the number of reference frames being 1 is used to illustrate the second video stream and the first video stream. The second video stream differs from the first video stream only in that a reference relationship during coding is different, that is, a video frame in the second video stream is coded only with reference to another video frame in the second video stream, and a video frame in the first video stream is coded only with reference to another video frame in the first video stream. During decoding, a video frame in the second video stream is decoded with reference to another video frame in the second video stream. There is a case in which a video frame in the first video stream is decoded with reference to a video frame in the second video stream, which will be described later.

As shown in FIG. 4a, a number of frames between adjacent IP frame groups is less than the GOP length of the first video stream. The number of frames between adjacent IP frame groups may be represented by a number of frames between I-frames of the two IP frame groups. In FIG. 4a, the number of frames between adjacent IP frame groups is equal to the number of frames between the I-frames of the two IP frame groups and is equal to 5 frames.

In an embodiment, considering that each GOP of the first video stream is corresponding to one or more IP frame groups of the second video stream, a number of frames between the first I-frame in each GOP of the first video stream and an I-frame in the first IP frame group corresponding to the GOP may be further set to be equal to a number of frames between adjacent IP frame groups, and a number of frames between an I-frame in the last IP frame group corresponding to the GOP and the last P-frame in the GOP is set to be equal to the number of frames between adjacent IP frame groups minus 1. As shown in FIG. 4a, a number of frames between a first frame (I frame) of a GOP in the first video stream and an I-frame in the first IP frame group corresponding to the GOP is equal to a number of frames between adjacent IP frame groups, and is equal to 5 frames. A number of frames between an I-frame in the last IP frame group corresponding to the GOP and the last P-frame of the GOP is 4 (not shown in the figure). Setting the IP frame group in the above setting manner is equivalent to forming a new GOP with a short length by using the I-frame in the IP frame group with the I-frame in the first video stream.

In an embodiment, a real-time performance requirement for live streaming is obtained. For example, the real-time performance requirement includes an allowed maximum delay time of a live streaming picture, for example, a delay of 2 seconds. Generally, when 1 second includes 25 frames of pictures, it may be obtained that 2 seconds include 50 frames of pictures, that is, the live streaming picture is allowed to be delayed by 50 frames at most. Based on this, the real-time performance requirement can be met by setting the number of frames between adjacent IP frame groups in the second video stream to be less than or equal to 50 frames, that is, a number of frames between two I-frames of adjacent IP frame groups to be less than or equal to 50 frames.

In an embodiment, when the first video stream includes a B-frame, the I-frame in the IP frame group has same picture content as a P-frame in the first video stream that has DTS, and the P-frame in the IP frame group has same picture content as a P-frame in the first video stream that has DTS. An interval between two adjacent video frames in the IP frame group is N frames, N is an integer greater than 0, and N is a number of B-frames between two adjacent P-frames in the first video stream.

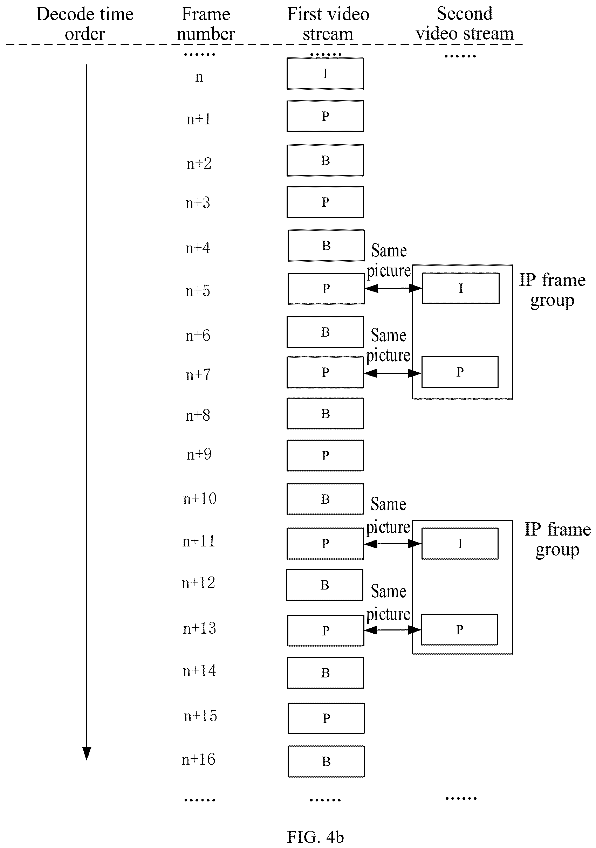

FIG. 4b is a schematic diagram of a first video stream and a second video stream according to another embodiment of the present disclosure. In FIG. 4b, n is a positive integer greater than or equal to 0, and video frames are arranged in an order of DTSs. In FIG. 4b, when the first video stream has a B-frame, picture content and picture quality, for example, a resolution, corresponding to video frames having a same DTS are the same in the first video stream and the second video stream. Specifically, an I-frame in an IP frame group has same picture content as a P-frame in the first video stream that has DTS, and the P-frame in the IP frame group has same picture content as a P-frame in the first video stream that has DTS. Assuming that the P-frame in each of the IP frame group and the first video stream is coded and decoded with reference to a previous frame, each IP frame group includes one I-frame and 1 subsequent P-frame that are spaced apart. It can be learned from comparison between FIG. 4a and FIG. 4b that an interval between two adjacent video frames in the IP frame group is N frames, N is an integer greater than 0, and N is a number of B-frames between two adjacent P-frames in the first video stream. In FIG. 4b, the number of B-frames is 1, and therefore the interval between two adjacent video frames in the IP frame group is 1 frame. That is, the B-frame does not need to be additionally coded in the second video stream. The P-frame in the IP frame group is coded and decoded with reference to the I-frame in the IP frame group.

It can be learned that in this embodiment, when the first video stream includes a B-frame, the IP frame group can be obtained through coding. It can be learned from a structure of the IP frame group that the B-frame does not need not to be coded, thereby saving a code stream of the IP frame group. In addition, a manner of obtaining the IP frame group through coding is simple, and coding efficiency is high. An I-frame in the IP frame group is set to have same picture content as a P-frame in the first video stream that has DTS, and a P-frame in the IP frame group is set to have same picture content as a P-frame in the first video stream that has DTS, which can ensure that when the video frames in the first video stream and the second video stream are delivered to a terminal device of a live streaming viewer, the video frames are correctly decoded and played.

As can be learned from the foregoing introduction, the number of P-frames included in each IP frame group is the same as the number of reference frames for the P-frames in the first video stream. Based on this, in an embodiment, when the number of reference frames for the P-frames in the first video stream is 1, the IP frame group includes one I-frame and one P-frame. It can be learned that when the number of reference frames for the P-frames in the first video stream is 1, setting the IP frame group to include one I-frame and one P-frame can reduce generation difficulty of the IP frame group, and increase efficiency of generating the IP frame group.

In an embodiment, when the number of reference frames for the P-frames in the first video stream is greater than 1, the IP frame group includes one I-frame and a plurality of P-frames, and the number of P-frames included in the IP frame group is the same as the number of reference frames for the P-frames in the first video stream. It can be learned that when the number of reference frames for the P-frames in the first video stream is greater than 1, the number of P-frames included in the IP frame group is set to be the same as the number of reference frames for the P-frames in the first video stream, so that the first video stream and the second video stream can be correctly decoded and played by the terminal device.

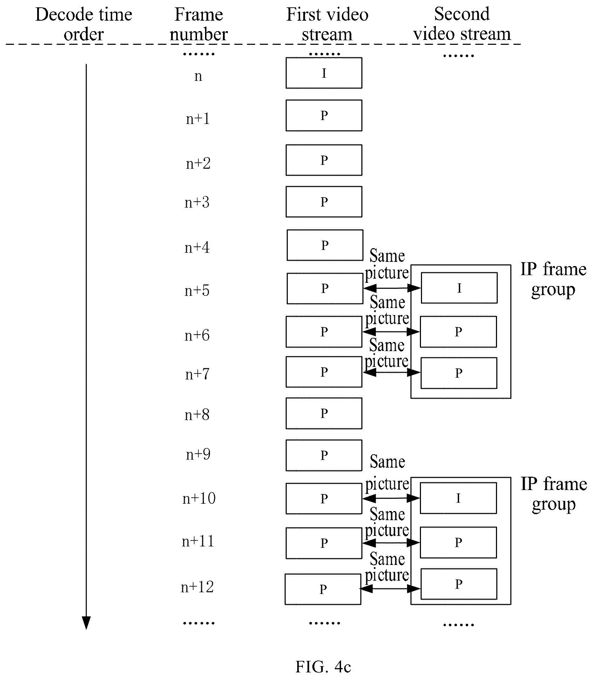

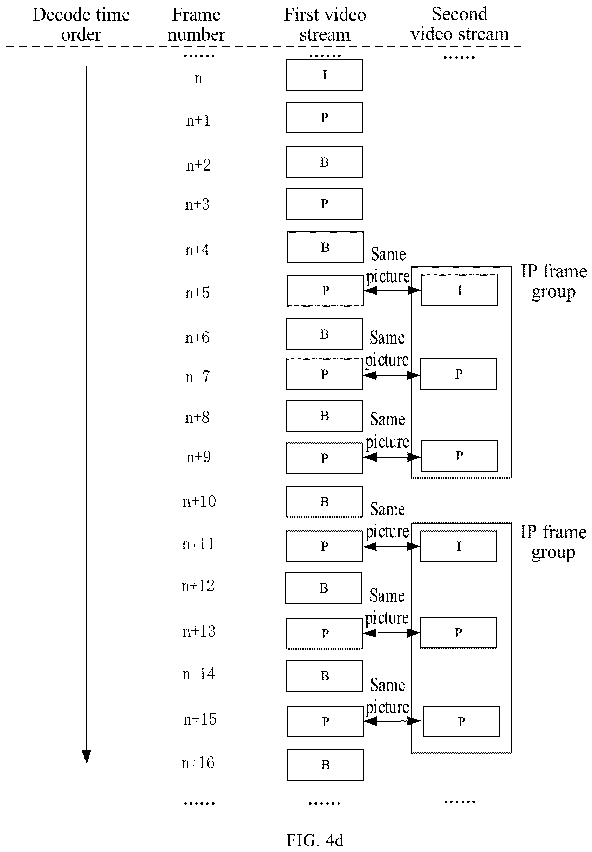

In the above FIG. 4a and FIG. 4b, that the number of reference frames for the P-frames in the first video stream is 1 is used as an example to illustrate the first video stream and the second video stream. FIG. 4c is a schematic diagram of the first video stream and the second video stream according to still another embodiment of the present disclosure. In FIG. 4c, that the first video stream does not include a B-frame and the number of reference frames for the P-frames in the first video stream is 2 is used as an example to illustrate the first video stream and the second video stream. It can be learned that in the second video stream, each IP frame group includes two P-frames. FIG. 4d is a schematic diagram of a first video stream and a second video stream according to still another embodiment of the present disclosure. In FIG. 4d, that the first video stream includes a B-frame and the number of reference frames for the P-frames in the first video stream is 2 is used as an example to illustrate the first video stream and the second video stream. It can be learned that in the second video stream, each IP frame group includes two P-frames, an interval between two adjacent video frames in the IP frame group is 1 frame, and a number of B-frames between two adjacent P-frames in the first video stream is also 1 frame.

In actual application, the first video stream and the second video stream may be obtained through coding in the following two manners:
(1) A streamer side codes collected video pictures to obtain the first video stream and the second video stream separately, and uploads the first video stream and the second video stream to the server, that is, the above technical solution in FIG. 3.
(2) The streamer side codes collected video pictures to obtain a group of video streams with a smaller GOP, and uploads this group of video streams with a smaller GOP to the server. The server performs coding based on the video stream to obtain the first video stream and the second video stream with a larger GOP. A GOP length of the first video stream is greater than a preset length.

In the above plurality of manners, the second video stream may be obtained through coding based on a video picture on the streamer side, or may be obtained through coding based on the first video stream. For example, the first video stream is obtained through coding based on the video picture on the streamer side, and the first video stream is directly coded to obtain the second video stream; or the first video stream and the second video stream are separately obtained through coding based on the video picture on the streamer side.

In an embodiment, after the first video stream and the second video stream are generated, the server may store the first video stream and the second video stream in any one of the following manners:
Manner 1: The first video stream and the second video stream are respectively stored as two independent video streams. Between the two video streams, video frames are aligned by using DTSs of the video frames. Picture content and picture quality of video frames whose DTSs are the same are the same. The picture quality includes a parameter such as a resolution.
Manner 2: A video frame of the second video stream is coded into the first video stream. For example, a coding standard of H.264/H.265 provides a supplemental enhancement information (SEI) module. The module may carry developer-defined information and may be coded together with video information. In this embodiment, the video frame of the second video stream is coded in an SEI field, so that one second video stream does not need to be separately stored. When a live streaming picture is pushed to a live streaming viewer subsequently, only one IP frame group needs to be pushed when the live streaming viewer enters a live streaming room, and pushing the first video stream is switched to subsequently. Therefore, in this storage manner, only information about one IP frame group needs to be read from the SEI module and delivered to the live streaming viewer. Subsequently, the information about the SEI carried in the first video stream does not need to be delivered to the live streaming viewer again.

In this embodiment of the present disclosure, after the first video stream and the second video stream are generated by using the above procedure, step S304 is further performed to send the first video stream and the second video stream to the server, so that the server sends the live streaming picture to the live streaming viewer based on the first video stream and the second video stream. A process in which the server sends the live streaming picture to the live streaming viewer based on the first video stream and the second video stream is described later.

The above describes a process in which the first terminal device generates and sends the first video stream and the second video stream. Based on a same technical concept, an embodiment of the present disclosure further provides a video processing method, applied to a server side and performed by a server.

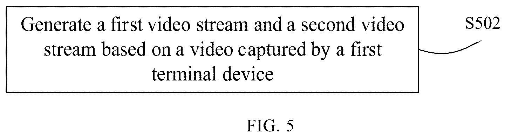

FIG. 5 is a schematic flowchart of a video processing method according to another embodiment of the present disclosure. As shown in FIG. 5, the method is performed by a server and includes:
Step S502: Generate a first video stream and a second video stream based on a video captured by a first terminal device, where the first video stream includes a plurality of consecutive GOPs, and the second video stream includes a plurality of IP frame groups spaced apart at an interval of a specific number of video frames; each GOP of the first video stream corresponds to one or more IP frame groups of the second video stream; each IP frame group including an I-frame and a P-frame after the I-frame; each video frame in each IP frame group has same picture content as a video frame in the first video stream that has a same DTS; and a number of the P-frames included in each IP frame group is the same as a number of reference frames for P-frames in the first video stream.

In this embodiment, because the IP frame groups in the second video stream are spaced apart at an interval of a specific number of video frames, the second video stream is not a complete video stream. Therefore, during video distribution, coding and delivering the second video stream can reduce coding resource consumption, reduce a delivered video code rate, and reduce a delay of pushing a live streaming picture to a terminal device, thereby ensuring real-time performance of live streaming.

As can be learned from the above introduction to the first video stream and the second video stream, in an embodiment, when the first video stream does not include a B-frame, the I-frame in the IP frame group has same picture content as a P-frame in the first video stream that has DTS, the P-frame in the IP frame group has same picture content as a P-frame in the first video stream that has DTS, and all video frames in the IP frame group are arranged consecutively.

In an embodiment, when the first video stream includes a B-frame, the I-frame in the IP frame group has same picture content as a P-frame in the first video stream that has DTS, and the P-frame in the IP frame group has same picture content as a P-frame in the first video stream that has DTS. An interval between two adjacent video frames in the IP frame group is M frames; and M is a number of B-frames between two adjacent P-frames in the first video stream, and M is an integer greater than 0.

In an embodiment, when the number of reference frames for the P-frames in the first video stream is 1, the IP frame group includes one I-frame and one P-frame.

In an embodiment, when the number of reference frames for the P-frames in the first video stream is greater than 1, the IP frame group includes one I-frame and a plurality of P-frames, and the number of P-frames included in the IP frame group is the same as the number of reference frames for the P-frames in the first video stream.

For specific structures of the first video stream and the second video stream, reference may be made to the above description, which is not repeated herein.

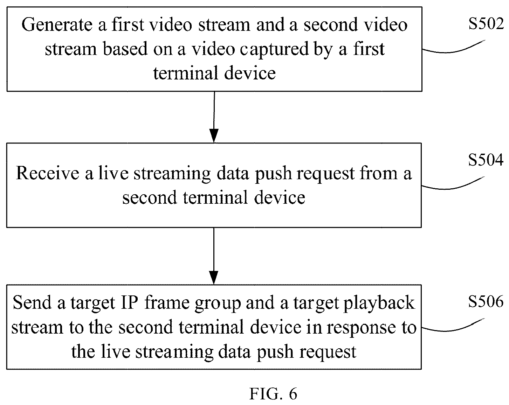

FIG. 6 is a schematic flowchart of a video processing method according to still another embodiment of the present disclosure. As shown in FIG. 6, based on FIG. 5, the procedure further includes:
Step S504: Receive a live streaming data push request from a second terminal device.
Step S506: Send a target IP frame group and a target playback stream to the second terminal device in response to the live streaming data push request, where the target IP frame group is an IP frame group in the second video stream, where the DTS of the IP frame group is before reception time of the live streaming data push request, and a time interval between the DTS and the reception time is within preset duration; and the target playback stream includes video frames in the first video stream that are located after a last P-frame in the target IP frame group and that start from a P-frame.

In step S504, the server receives the live streaming data push request from the second terminal device. The second terminal device may be a terminal device of a live streaming viewer. Specifically, when the live streaming viewer enters a live streaming room, the second terminal device generates a live streaming data push request based on an operation of the live streaming viewer entering the live streaming room, and sends the live streaming data push request to the server. The server thus receives the live streaming data push request sent by the second terminal device.

In step S506, the server determines the target IP frame group in the second video stream in response to the live streaming data push request based on the reception time of the live streaming data push request, pushes the target IP frame group to the second terminal device, determines the target playback stream in the first video stream, and pushes the target playback stream to the second terminal device. Because the reception time of receiving the live streaming data push request by the server, sending time of sending the live streaming data push request by the second terminal device, and time of entering the live streaming room by the live streaming viewer are basically the same, in another embodiment, the server may alternatively determine the target IP frame group in the second video stream based on the sending time of sending the live streaming data push request by the second terminal device or the time of entering the live streaming room by the live streaming viewer, push the target IP frame group to the terminal device, determine the target playback stream in the first video stream, and push the target playback stream to the second terminal device.

The target IP frame group is an IP frame group in the second video stream, where the DTS of the IP frame group is before the reception time of the live streaming data push request with a time interval between the DTS and the reception time being within preset duration. Specifically, the target IP frame group is an IP frame group in which an I-frame in the second video stream, where the DTS of the IP frame group is before the reception time of the live streaming data push request with a time interval between the DTS and the reception time being within the preset duration is located. Because the DTS of the target IP frame group is before the reception time of the live streaming data push request and the time interval between the DTS and the reception time is within the preset duration, for example, within 1 millisecond, it can be ensured that a time delay of the live streaming picture is small, meeting live streaming viewing needs of the live streaming viewer.

In an embodiment, the target IP frame group is an IP frame group in the second video stream, where the DTS of the IP frame group is before the reception time of the live streaming data push request and is closest to the reception time. Specifically, the target IP frame group is an IP frame group in which an I-frame in the second video stream, where the DTS of the IP frame group is before the reception time of the live streaming data push request and is closest to the reception time is located.

An IP frame group in which an I-frame whose DTS is before the reception time and is closest to the reception time is located may be determined in the second video stream, and the determined IP frame group is used as the target IP frame group. Because the target IP frame group is an IP frame group in the second video stream, where the DTS of the IP frame group is before the reception time of the live streaming data push request and is closest to the reception time, the time delay of the live streaming picture can be minimized, improving live streaming viewing experience of the live streaming viewer. Because picture content of a video frame in the IP frame group is the same as picture content of a corresponding video frame in the first video stream, an effect of pushing the live streaming picture is also achieved by pushing the target IP frame group.

In addition to the target IP frame group, the target playback stream is also pushed, and the target playback stream includes video frames in the first video stream that are located after a last P-frame in the target IP frame group and that start from a P-frame. In an embodiment, an order in which video frames are pushed to the terminal device is the same as an order of DTSs of the video frames, so that the first video stream and the second video stream are arranged in the order of DTSs. In this arrangement, the first P-frame whose DTS is after the target IP frame group is determined in the first video stream, and a video stream starting from the first P-frame and including the P-frame is pushed to the second terminal device as the target playback stream. As can be learned, in this embodiment, it is able to switch to the first video stream to continue to push the live streaming picture to the second terminal device after pushing the target IP frame group ends. Therefore, an advantage that the first video stream has a large GOP is used to reduce a video code rate and improve video transmission efficiency.

In an embodiment, the above method procedure further includes:
determining whether an I-frame whose DTS is before the reception time and closest to the reception time is in the first video stream or in the second video stream; and
if the closest I-frame is in the second video stream, sending the target IP frame group and the target playback stream to the second terminal device in response to the live streaming data push request.

Specifically, after the reception time of the live streaming data push request is determined, it is determined whether an I-frame whose DTS is before the reception time and closest to the reception time is in the first video stream or in the second video stream. For example, if the reception time is 10:00:00, the first video stream has an I-frame whose DTS is before the reception time and is specifically 10:00:03, and the second video stream has an I-frame whose DTS is before the reception time and is specifically 10:00:01, it may be determined that the I-frame whose DTS is before the reception time and closest to the reception time is in the second video stream.

Certainly, in contrast, if the reception time is 10:00:00, the first video stream has an I-frame whose DTS is before the reception time and is specifically 10:00:01, and the second video stream has an I-frame whose DTS is before the reception time and is specifically 10:00:03, it may be determined that the I-frame whose DTS is before the reception time and closest to the reception time is in the first video stream.

It can be understood that when the live streaming picture is pushed to the second terminal device, it is necessary to start pushing from the I-frame to ensure that the live streaming picture is correctly decoded and played. The step of sending the target IP frame group and the target playback stream to the second terminal device in response to the live streaming data push request is performed after it is determined that the I-frame whose DTS is before the reception time and closet to the reception time is in the second video stream. Certainly, if it is determined that the I-frame whose DTS is before the reception time and closet to the reception time is in the first video stream, the first video stream may be pushed to the second terminal device directly starting from this closet I-frame in the first video stream.

The process of determining the target IP frame group and the target playback stream and pushing the target IP frame group and the target playback stream to the second terminal device is described in detail below by using specific accompanying drawings.

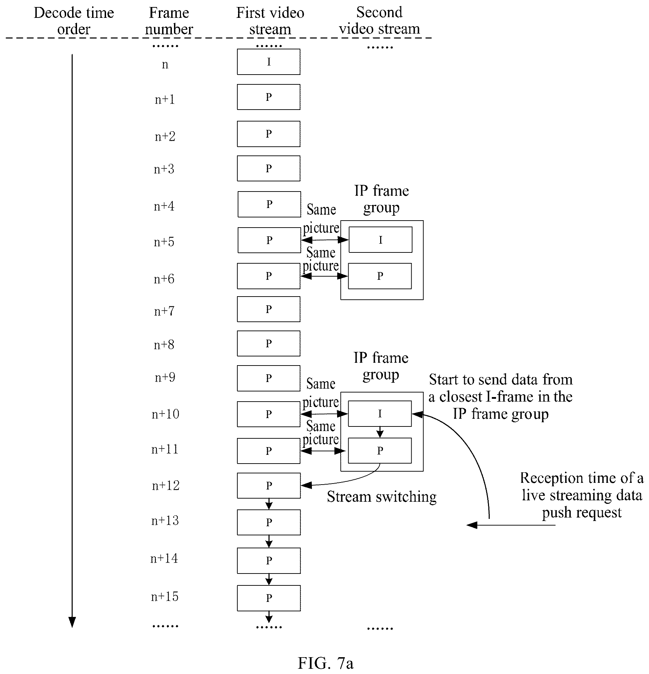

FIG. 7a is a schematic diagram of pushing a first video stream and a second video stream according to an embodiment of the present disclosure. In FIG. 7a, n is a positive integer greater than or equal to 0, and video frames are arranged in an order of DTSs. As shown in FIG. 7a, for example, when the first video stream does not include a B-frame, a number of reference frames for P-frames is 1. When time at which the server receives the live streaming data push request of the second terminal device is corresponding to a DTS of video frame n+13, for example, the DTS of video frame n+13 is 0:15, and the time at which the request is received is 0:16. Video frame n+13 is a video frame whose DTS is before the reception time of the request and closest to the reception time of the request. According to the above procedure, it is found that the I-frame whose DTS is before the reception time and closest to the reception time is in the second video stream, so as to determine that an IP frame group in which the closest I-frame is located is the target IP frame group, and the target IP frame group includes an IP frame group including I-frame n+10 and P-frame n+11. Thus, the IP frame group including I-frame n+10 and P-frame n+11 is sequentially pushed to the second terminal device, and after pushing of the IP frame group is completed, starting from P-frame n+12 in the first video stream, the live streaming picture continues to be pushed to the second terminal device. As can be learned, in this embodiment, there is a delay of only 3 frames of picture, that is, frames n+10, n+11, and n+12. Frame n+13 is the first frame of picture that the live streaming viewer should theoretically see when entering the live streaming room, thus ensuring real-time performance of live streaming.

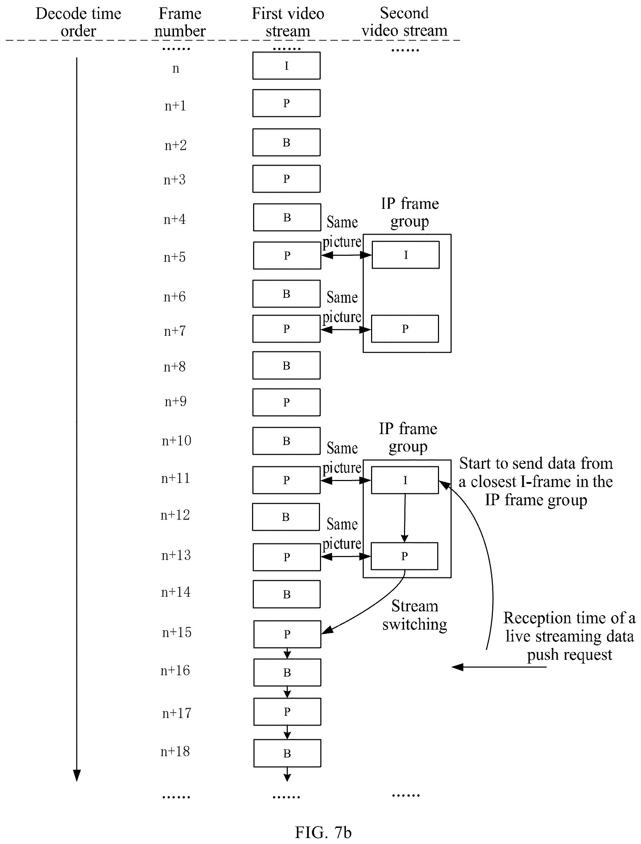

FIG. 7b is a schematic diagram of pushing a first video stream and a second video stream according to another embodiment of the present disclosure. In FIG. 7b, n is a positive integer greater than or equal to 0, and video frames are arranged in an order of DTSs. As shown in FIG. 7b, for example, when the first video stream includes a B-frame, a number of reference frames for P-frames is 1, and a number of B-frames is 1. When time at which the server receives the live streaming data push request of the second terminal device is corresponding to a DTS of video frame n+16, for example, the DTS of video frame n+16 is 0:15, and the time at which the request is received is 0:16. Video frame n+16 is a video frame whose DTS is before the reception time of the request and closest to the reception time of the request. According to the above procedure, it is found that the I-frame whose DTS is before the reception time and closest to the reception time is in the second video stream, so as to determine that an IP frame group in which the closest I-frame is located is the target IP frame group, and the target IP frame group includes an IP frame group including I-frame n+11 and P-frame n+13. Thus, the IP frame group including I-frame n+11 and P-frame n+13 is sequentially pushed to the second terminal device, and after pushing of the IP frame group is completed, because frame n+14 in the first video stream is a B-frame, starting from P-frame n+15 in the first video stream, the live streaming picture continues to be pushed to the second terminal device. As can be learned, in this embodiment, when the first video stream has a B-frame, a delay of the live streaming picture can also be reduced, thereby ensuring real-time performance of live streaming.

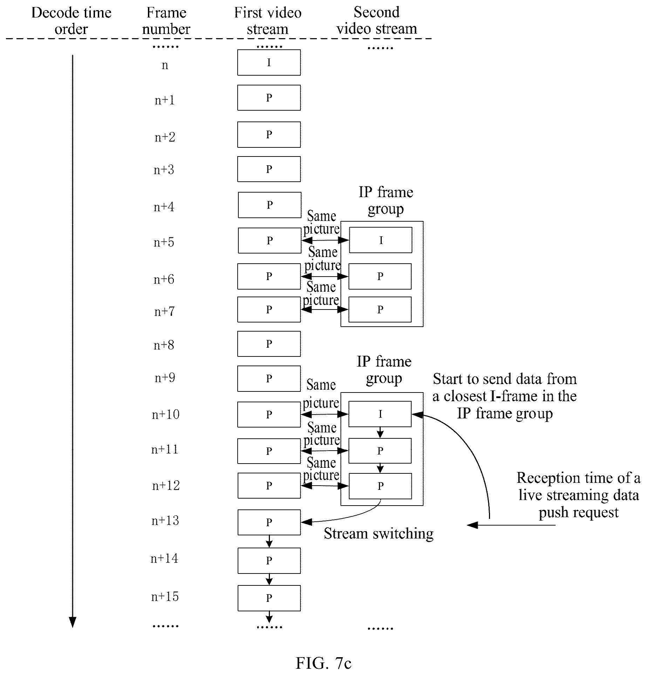

FIG. 7c is a schematic diagram of pushing a first video stream and a second video stream according to still another embodiment of the present disclosure. In FIG. 7c, n is a positive integer greater than or equal to 0, and video frames are arranged in an order of DTSs. As shown in FIG. 7c, for example, when the first video stream does not include a B-frame, a number of reference frames for P-frames is 2. When time at which the server receives the live streaming data push request of the second terminal device is corresponding to a DTS of video frame n+13, for example, the DTS of video frame n+13 is 0:15, and the time at which the request is received is 0:16. Video frame n+13 is a video frame whose DTS is before the reception time of the request and closest to the reception time of the request. According to the above procedure, it is found that the I-frame whose DTS is before the reception time and closest to the reception time is in the second video stream, so as to determine that an IP frame group in which the closest I-frame is located is the target IP frame group, and the target IP frame group includes an IP frame group including I-frame n+10, P-frame n+11, and P-frame n+12. Thus, the IP frame group including I-frame n+10, P-frame n+11, and P-frame n+12 is sequentially pushed to the second terminal device, and after pushing of the IP frame group is completed, starting from P-frame n+13 in the first video stream, the live streaming picture continues to be pushed to the second terminal device. As can be learned, in this embodiment, there is a delay of only 3 frames of picture, that is, frames n+10, n+11, and n+12. Frame n+13 is the first frame of picture that the live streaming viewer should theoretically see when entering the live streaming room, thus ensuring real-time performance of live streaming.

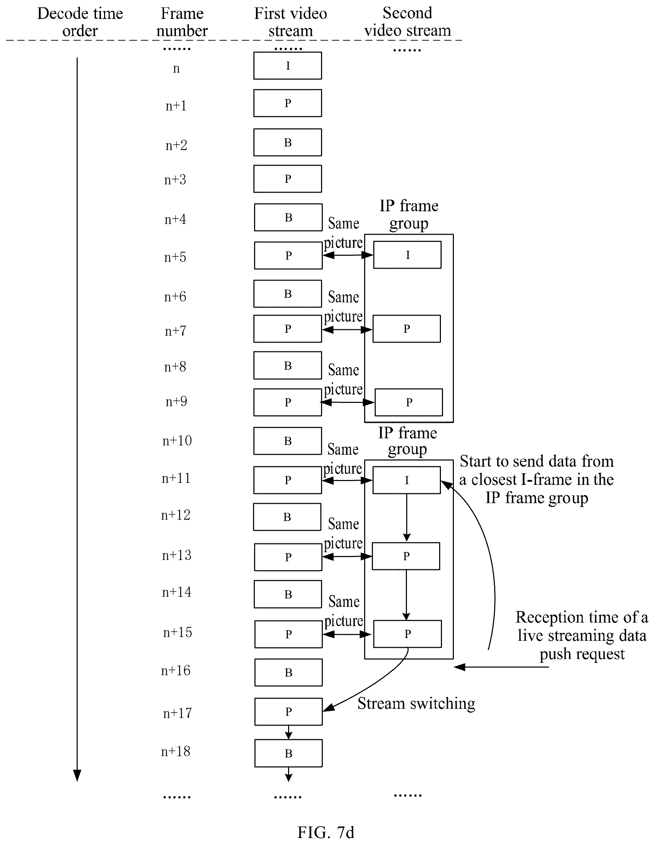

FIG. 7d is a schematic diagram of pushing a first video stream and a second video stream according to still another embodiment of the present disclosure. In FIG. 7d, n is a positive integer greater than or equal to 0, and video frames are arranged in an order of DTSs. As shown in FIG. 7d, for example, when the first video stream includes a B-frame, a number of reference frames for P-frames is 2, and a number of B-frames is 1. When time at which the server receives the live streaming data push request of the second terminal device is corresponding to a DTS of video frame n+16, for example, the DTS of video frame n+16 is 0:15, and the time at which the request is received is 0:16. Video frame n+16 is a video frame whose DTS is before the reception time of the request and closest to the reception time of the request. According to the above procedure, it is found that the I-frame whose DTS is before the reception time and closest to the reception time is in the second video stream, so as to determine that an IP frame group in which the closest I-frame is located is the target IP frame group, and the target IP frame group includes an IP frame group including I-frame n+11, P-frame n+13, and P-frame n+15. Thus, the IP frame group including I-frame n+11, P-frame n+13, and P-frame n+15 is sequentially pushed to the second terminal device, and after pushing of the IP frame group is completed, because frame n+16 in the first video stream is a B-frame, starting from P-frame n+ 17 in the first video stream, the live streaming picture continues to be pushed to the second terminal device. As can be learned, in this embodiment, when the first video stream has a B-frame, a delay of the live streaming picture can also be reduced, thereby ensuring real-time performance of live streaming.

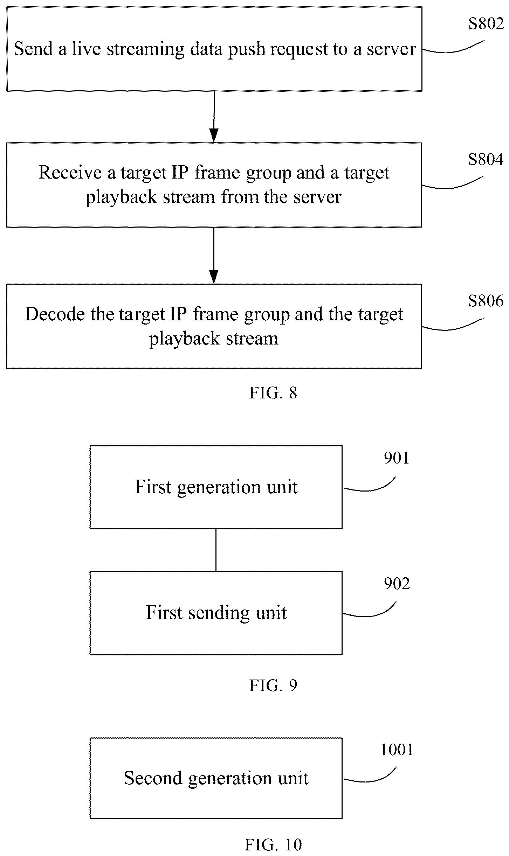

After receiving the video frame pushed by the server, the second terminal device needs to perform decoding and playback. Based on this, FIG. 8 is a schematic flowchart of a video processing method according to still another embodiment of the present disclosure. The method is applied to the above second terminal device, that is, the terminal device of the live streaming viewer, and is performed by the second terminal device. As shown in FIG. 8, the method includes:
Step S802: Send a live streaming data push request to a server.
Step S804: Receive a target IP frame group and a target playback stream from the server, where the target IP frame group is an IP frame group in a second video stream, where the DTS of the IP frame group is before reception time of the live streaming data push request, and a time interval between the DTS and the reception time is within preset duration; and the target playback stream includes video frames in the first video stream that are located after a last P-frame in the target IP frame group and that start from a P-frame.
Step S806: Decode the target IP frame group and the target playback stream.

In this embodiment, during video distribution, by delivering the target IP frame group and the target playback stream, coding resource consumption can be reduced, a delivered video code rate can be reduced, and a delay of pushing a live streaming picture to the terminal device can be reduced to ensure real-time performance of live streaming.

In step S802, the second terminal device sends the live streaming data push request to the server. Specifically, after determining that a user has entered a live streaming room, the second terminal device determines the user as a live streaming viewer, and generates and sends a live streaming data push request to the server.

In step S804, the second terminal device receives the target IP frame group and the target playback stream from the server. For content of the target IP frame group and the target playback stream, refer to the above description. Details are not described herein.

In step S806, the second terminal device decodes the target IP frame group and the target playback stream.

In an embodiment, decoding the target IP frame group and the target playback stream includes:
decoding the first P-frame in the target playback stream with reference to a P-frame in the target IP frame group, and decoding the P-frame in the target IP frame group with reference to an I-frame in the target IP frame group, when the target playback stream does not include a B-frame, a number of reference frames in the target playback stream is 1, and the first video frame in the target playback stream is not an I-frame.

Specifically, when the target playback stream does not include a B-frame, and the number of reference frames in the target playback stream is 1, the IP frame group includes one I-frame and one P-frame. The first video frame in the target playback stream is not an I-frame but a P-frame. In this case, because video frames in the first video stream and the second video stream that has DTS have same picture content, the first P-frame in the target playback stream is decoded with reference to the P-frame in the target IP frame group, and based on a reference relationship, the P-frame in the target IP frame group is decoded with reference to the I-frame in the target IP frame group.

As shown in FIG. 7a, when the target playback stream does not include a B-frame, and the number of reference frames in the target playback stream is 1, it can be learned that the IP frame group includes one I-frame and one P-frame, and the first video frame in the target playback stream is not an I-frame. In this case, P-frame n+12 is used as the first P-frame in the target playback stream and is decoded with reference to the P-frame in the target IP frame group, namely, P-frame n+11, and the P-frame in the target IP frame group, namely, P-frame n+11, is decoded with reference to the I-frame in the target IP frame group, namely, I-frame n+10. When playing the live streaming picture, the second terminal device first plays I-frame n+10 and P-frame n+11 in the target IP frame group, and then starts to play the target playback stream from P-frame n+12 in the target playback stream.

It can be learned that, in this embodiment, when the target playback stream does not include a B-frame, the number of reference frames in the target playback stream is 1, and the first video frame in the target playback stream is not an I-frame, normal decoding and playback of the target playback stream and the target IP frame group can be implemented, thereby ensuring live streaming viewing experience of the live streaming viewer.

In an embodiment, decoding the target IP frame group and the target playback stream includes:
decoding the first P-frame in the target playback stream with reference to the first P-frame to a T^{th} P-frame in the target IP frame group, decoding an S^{th} P-frame in the target IP frame group with reference to the first S-1 P-frames in the target IP frame group and an I-frame in the target IP frame group, and decoding the first P-frame in the target IP frame group with reference to the I-frame in the target IP frame group, when the target playback stream does not include a B-frame, a number of reference frames in the target playback stream is T, and the first video frame in the target playback stream is not an I-frame; where T is an integer greater than 1, and S is an integer greater than or equal to 2 and less than or equal to T.

Specifically, when the target playback stream does not include a B-frame, and the number of reference frames in the target playback stream is T, the IP frame group includes one I-frame and T P-frames. T is an integer greater than 1. The first video frame in the target playback stream is not an I-frame but a P-frame. In this case, because video frames in the first video stream and the second video stream that has DTS have same picture content, when the first P-frame in the target playback stream needs to be decoded with reference to T P-frames, the first P-frame is decoded with reference to the first P-frame to a T^{th} P-frame in the target IP frame group. In addition, based on a reference relationship, a S^{th} P-frame in the target IP frame group is decoded with reference to the first S-1 P-frames in the target IP frame group and the I-frame in the target IP frame group, and the first P-frame in the target IP frame group is decoded with reference to the I-frame in the target IP frame group, where S is an integer greater than or equal to 2 and less than or equal to T. For example, when T is equal to 3, the first P-frame in the target playback stream is decoded with reference to the first P-frame to the third P-frame in the target IP frame group, the third P-frame in the target IP frame group is decoded with reference to the first two P-frames in the target IP frame group and the I-frame in the target IP frame group, the second P-frame in the target IP frame group is decoded with reference to the first P-frame in the target IP frame group and the I-frame in the target IP frame group, and the first P-frame in the target IP frame group is decoded with reference to the I-frame in the target IP frame group.

As shown in FIG. 7c, for example, T is equal to 2. When the target playback stream does not include a B-frame, and the number of reference frames in the target playback stream is 2, it can be learned that the IP frame group includes one I-frame and two P-frames, and the first video frame in the target playback stream is not an I-frame. In this case, P-frame n+13 is used as the first P-frame in the target playback stream and is decoded with reference to the two P-frames in the target IP frame group, namely, P-frame n+11 and P-frame n+12, P-frame n+12 in the target IP frame group is decoded with reference to P-frame n+11 and I-frame n+10 in the target IP frame group, and P-frame n+11 in the target IP frame group is decoded with reference to the I-frame in the target IP frame group, namely, I-frame n+10. When playing the live streaming picture, the second terminal device first plays I-frame n+10, P-frame n+11, and P-frame n+12 in the target IP frame group, and then starts to play the target playback stream from P-frame n+13 in the target playback stream.

It can be learned that, in this embodiment, when the target playback stream does not include a B-frame, the number of reference frames in the target playback stream is T, and the first video frame in the target playback stream is not an I-frame, the target playback stream and the target IP frame group are normally decoded and played, thereby ensuring live streaming viewing experience of the live streaming viewer.

In an embodiment, decoding the target IP frame group and the target playback stream includes:
decoding the first P-frame in the target playback stream with reference to a P-frame in the target IP frame group, and decoding the P-frame in the target IP frame group with reference to an I-frame in the target IP frame group, when the target playback stream includes a B-frame, a number of reference frames in the target playback stream is 1, and the first video frame in the target playback stream is not an I-frame.

Specifically, when the target playback stream includes a B-frame, and the number of reference frames in the target playback stream is 1, the IP frame group includes one I-frame and one P-frame, and a number of video frames between the I-frame and the P-frame is equal to a number of B-frames. The first video frame in the target playback stream is not an I-frame but a P-frame. In this case, because video frames in the first video stream and the second video stream that has DTS have same picture content, the first P-frame in the target playback stream is decoded with reference to the P-frame in the target IP frame group, and based on a reference relationship, the P-frame in the target IP frame group is decoded with reference to the I-frame in the target IP frame group.

As shown in FIG. 7b, when the target playback stream includes a B-frame, and the number of reference frames in the target playback stream is 1, an example in which the number of B-frames is 1 is used. It can be learned that the IP frame group includes one I-frame and one P-frame, one video frame is spaced apart between the I-frame and the P-frame, and the first video frame in the target playback stream is a P-frame but not an I-frame. In this case, P-frame n+15 is used as the first P-frame in the target playback stream and is decoded with reference to the P-frame in the target IP frame group, namely, P-frame n+13, and the P-frame in the target IP frame group, namely, P-frame n+13, is decoded with reference to the I-frame in the target IP frame group, namely, I-frame n+11.

However, because B-frames n+12 and n+14 are missing from the video frames pushed to the terminal device, in consideration that an original correct playback order of the first video stream is n+12-n+11-n+14-n+13-n+16-n+15, in this embodiment, playback directly starts from P-frame n+13 in the IP frame group, that is, the last P-frame in the target IP frame group is played, and then B-frame n+16 and P-frame n+15 in the first video stream are played. B-frame n+16 in the first video stream should originally reference to P-frame n+13 and P-frame n+15 in the first video stream. Because picture content of P-frame n+13 is the same in the first video stream and the second video stream, B-frame n+16 in the first video stream may be decoded with reference to P-frame n+13 in the second video stream and P-frame n+15 in the first video stream. In other words, when the B-frame in the target playback stream needs to be decoded with reference to the P-frame in the first video stream, if the referenced P-frame in the first video stream is not delivered to the second terminal device, the second terminal device decodes the B-frame in the target playback stream by using a P-frame in the target IP frame group and whose DTS is the same.

It can be learned that, in this embodiment, when the target playback stream includes a B-frame, the number of reference frames in the target playback stream is 1, and the first video frame in the target playback stream is not an I-frame, each video frame in the target playback stream and the target IP frame group can be decoded to play the live streaming picture, thereby ensuring live streaming viewing experience of the live streaming viewer.

In an embodiment, decoding the target IP frame group and the target playback stream includes:
decoding the first P-frame in the target playback stream with reference to the first P-frame to an X^{th} P-frame in the target IP frame group, decoding a Y^{th} P-frame in the target IP frame group with reference to the first Y-1 P-frames in the target IP frame group and an I-frame in the target IP frame group, and decoding the first P-frame in the target IP frame group with reference to the I-frame in the target IP frame group, when the target playback stream includes a B-frame, a number of reference frames in the target playback stream is X, and the first video frame in the target playback stream is not an I-frame; where X is an integer greater than 1, and Y is an integer greater than or equal to 2 and less than or equal to X.

Specifically, when the target playback stream includes a B-frame, and the number of reference frames in the target playback stream is X, the IP frame group includes one I-frame and X P-frames, a number of frames between two adjacent video frames in the IP frame group is equal to the number of B-frames, and X is an integer greater than 1. The first video frame in the target playback stream is not an I-frame but a P-frame. In this case, because video frames in the first video stream and the second video stream that has DTS have same picture content, when the first P-frame in the target playback stream needs to be decoded with reference to X P-frames, the first P-frame is decoded with reference to the first P-frame to an X^{th} P-frame in the target IP frame group. In addition, based on a reference relationship, a Y^{th} P-frame in the target IP frame group is decoded with reference to the first Y-1 P-frames in the target IP frame group and the I-frame in the target IP frame group, and the first P-frame in the target IP frame group is decoded with reference to the I-frame in the target IP frame group, where Y is an integer greater than or equal to 2 and less than or equal to X. For example, when X is equal to 3, the first P-frame in the target playback stream is decoded with reference to the first P-frame to the third P-frame in the target IP frame group, the third P-frame in the target IP frame group is decoded with reference to the first two P-frames in the target IP frame group and the I-frame in the target IP frame group, the second P-frame in the target IP frame group is decoded with reference to the first P-frame in the target IP frame group and the I-frame in the target IP frame group, and the first P-frame in the target IP frame group is decoded with reference to the I-frame in the target IP frame group.

As shown in FIG. 7d, for example, X is equal to 2. When the target playback stream includes a B-frame, and the number of reference frames in the target playback stream is 2, an example in which the number of B-frames is 1 is used. It can be learned that the IP frame group includes one I-frame and two P-frames, one video frame is spaced apart between the I-frame and the P-frame, and the first video frame in the target playback stream is not an I-frame. In this case, P-frame n+17 is used as the first P-frame in the target playback stream and is decoded with reference to the two P-frames in the target IP frame group, namely, P-frame n+13 and P-frame n+15, P-frame n+15 in the target IP frame group is decoded with reference to P-frame n+13 and I-frame n+11 in the target IP frame group, and P-frame n+13 in the target IP frame group is decoded with reference to the I-frame in the target IP frame group, namely, I-frame n+11.

However, because B-frames n+12, n+14, and n+16 are missing from the video frames pushed to the terminal device, in consideration that an original correct playback order of the first video stream is n+12-n+11-n+14-n+13-n+16-n+15-n+18-n+17, in this embodiment, playback directly starts from P-frame n+15 in the IP frame group, that is, the last P-frame in the target IP frame group is played, and then B-frame n+18 and P-frame n+ 17 in the first video stream are played.

B-frame n+18 in the first video stream should originally reference to P-frame n+15 and P-frame n+17 in the first video stream. Because picture content of P-frame n+15 is the same in the first video stream and the second video stream, B-frame n+18 in the first video stream may be decoded with reference to P-frame n+15 in the second video stream and P-frame n+ 17 in the first video stream. In other words, when the B-frame in the target playback stream needs to be decoded with reference to the P-frame in the first video stream, if the referenced P-frame in the first video stream is not delivered to the second terminal device, the second terminal device decodes the B-frame in the target playback stream by using a P-frame in the target IP frame group and whose DTS is the same.

It can be learned that, in this embodiment, when the target playback stream includes a B-frame, the number of reference frames in the target playback stream is X, and the first video frame in the target playback stream is not an I-frame, video frames in the target playback stream and the target IP frame group can be decoded to play the live streaming picture, thereby ensuring live streaming viewing experience of the live streaming viewer.

In conclusion, embodiments of the present disclosure provide a video processing method. When a first video stream is coded, one second video stream that includes only an IP frame group is obtained through coding, and at a start stage that a live streaming viewer enters a live streaming room, a live streaming delay caused when the first video stream is directly sent is reduced in a manner of sending the IP frame group. In addition, when the IP frame group is sent, an additional amount of data that needs to be sent is not determined by a GOP in the first video stream, but determined by a location of inserting the IP frame group into the first video stream. Therefore, a video code rate can be reduced by increasing the GOP of the first video stream, so as to reduce live streaming transmission costs and a requirement for a network bandwidth.

In addition, because the second video stream is not a complete video stream, a data amount is very small, and excessive coding resources are not occupied. In a switching process of switching from the IP frame group to the first video stream, viewing experience of the live streaming viewer at a live streaming start stage does not deteriorate, thereby improving live streaming experience of the live streaming viewer. In an experimental test, a GOP length of the first video stream may be 10s, which reduces a video code rate by about 10%, and a code rate of the second video stream accounts for only one tenth of a code rate of the first video stream.

The present disclosure further provides a video processing apparatus. FIG. 9 is a schematic structural diagram of a video processing apparatus according to an embodiment of the present disclosure. As shown in FIG. 9, the video processing apparatus includes:
a first generation unit 901 configured to generate, by a first terminal device, a first video stream and a second video stream based on a video captured by the first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream; and
a first sending unit 902 configured to send the first video stream and the second video stream to a server.

Optionally, when the first video stream does not include a bidirectionally predictive coded picture B-frame, the I-frame in the IP frame group has same picture content as a P-frame in the first video stream that has decode time stamp DTS, the P-frame in the IP frame group has same picture content as a P-frame in the first video stream that has decode time stamp DTS, and all video frames in the IP frame group are arranged consecutively.

Optionally, when the first video stream includes a bidirectionally predictive coded picture B-frame, the I-frame in the IP frame group has same picture content as a P-frame in the first video stream that has decode time stamp DTS, the P-frame in the IP frame group has same picture content as a P-frame in the first video stream that has decode time stamp DTS, and an interval between two adjacent video frames in the IP frame group is N frames; and N is a number of B-frames between two adjacent P-frames in the first video stream.

Optionally, when the number of reference frames for the P-frames in the first video stream is 1, the IP frame group includes one I-frame and one P-frame.

Optionally, when the number of reference frames for the P-frames in the first video stream is greater than 1, the IP frame group includes one I-frame and a plurality of P-frames, and the number of P-frames included in the IP frame group is the same as the number of reference frames for the P-frames in the first video stream.

The video processing apparatus in this embodiment of the present disclosure may implement the above processes of the video processing method embodiment applied to the first terminal device, and achieve the same effects and functions. Details are not repeated herein.

The present disclosure further provides a video processing apparatus. FIG. 10 is a schematic structural diagram of a video processing apparatus according to another embodiment of the present disclosure. As shown in FIG. 10, the video processing apparatus includes:

a second generation unit 1001 configured to generate a first video stream and a second video stream based on a video captured by a first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream.

Optionally, the apparatus further includes:
a request receiving unit configured to receive a live streaming data push request from a second terminal device; and
a video sending unit configured to send a target IP frame group and a target playback stream to the second terminal device in response to the live streaming data push request, where the target IP frame group is an IP frame group in the second video stream, where the DTS of the IP frame group is before reception time of the live streaming data push request, and a time interval between the DTS and the reception time is within preset duration; and the target playback stream includes video frames in the first video stream that are located after a last P-frame in the target IP frame group and that start from a P-frame.

Optionally, the target IP frame group is an IP frame group in the second video stream, where the DTS of the IP frame group is before the reception time and closest to the reception time.

Optionally, when the first video stream does not include a bidirectionally predictive coded picture B-frame, the I-frame in the IP frame group has same picture content as a P-frame in the first video stream that has decode time stamp DTS, the P-frame in the IP frame group has same picture content as a P-frame in the first video stream that has decode time stamp DTS, and all video frames in the IP frame group are arranged consecutively.

Optionally, when the first video stream includes a bidirectionally predictive coded picture B-frame, the I-frame in the IP frame group has same picture content as a P-frame in the first video stream that has decode time stamp DTS, the P-frame in the IP frame group has same picture content as a P-frame in the first video stream that has decode time stamp DTS, and an interval between two adjacent video frames in the IP frame group is M frames; and M is a number of B-frames between two adjacent P-frames in the first video stream.

Optionally, when the number of reference frames for the P-frames in the first video stream is 1, the IP frame group includes one I-frame and one P-frame.

Optionally, when the number of reference frames for the P-frames in the first video stream is greater than 1, the IP frame group includes one I-frame and a plurality of P-frames, and the number of P-frames included in the IP frame group is the same as the number of reference frames for the P-frames in the first video stream.

The video processing apparatus in this embodiment of the present disclosure may implement the above processes of the video processing method embodiment applied to the server, and achieve the same effects and functions. Details are not repeated herein.

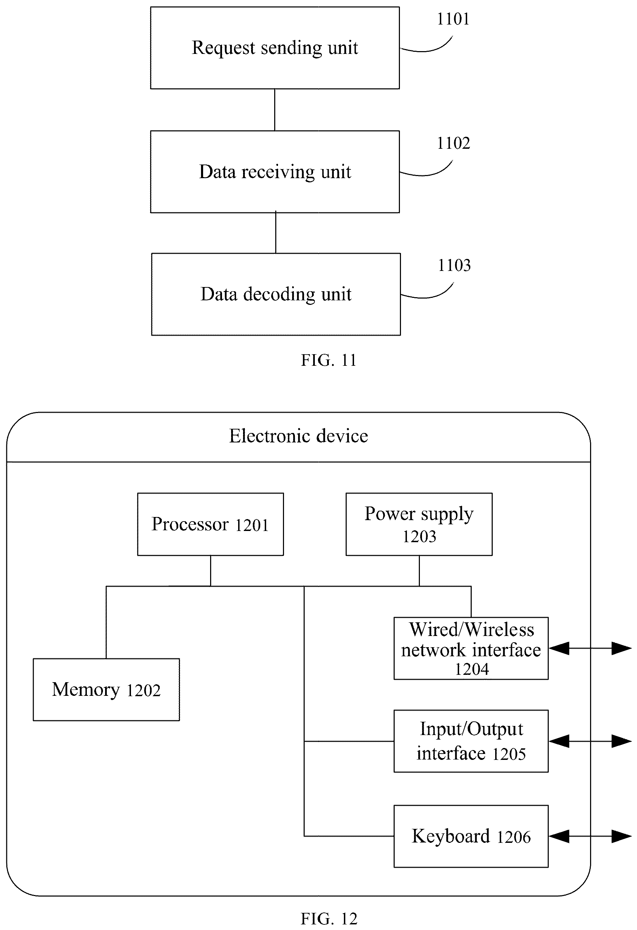

The present disclosure further provides a video processing apparatus. FIG. 11 is a schematic structural diagram of a video processing apparatus according to still another embodiment of the present disclosure. As shown in FIG. 11, the video processing apparatus includes:
a request sending unit 1101 configured to send a live streaming data push request to a server;
a data receiving unit 1102 configured to receive a target IP frame group and a target playback stream from the server, where the target IP frame group is an IP frame group in a second video stream, where the decode time stamp DTS of the IP frame group is before reception time of the live streaming data push request, and a time interval between the DTS and the reception time is within preset duration; and the target playback stream includes video frames in a first video stream that are located after a last predictive coded picture P-frame in the target IP frame group and that start from a P-frame; and
a data decoding unit 1103 configured to decode the target IP frame group and the target playback stream.

Optionally, the decoding the target IP frame group and the target playback stream includes:
decoding a first P-frame in the target playback stream with reference to a P-frame in the target IP frame group, and decoding the P-frame in the target IP frame group with reference to an I-frame in the target IP frame group, when the target playback stream does not include a bidirectionally predictive coded picture B-frame, a number of reference frames in the target playback stream is 1, and a first video frame in the target playback stream is not an I-frame.

Optionally, the decoding the target IP frame group and the target playback stream includes:
decoding a first P-frame in the target playback stream with reference to a first P-frame to a T^{th} P-frame in the target IP frame group, decoding an S^{th} P-frame in the target IP frame group with reference to first S-1 P-frames in the target IP frame group and an I-frame in the target IP frame group, and decoding a first P-frame in the target IP frame group with reference to the I-frame in the target IP frame group, when the target playback stream does not include a bidirectionally predictive coded picture B-frame, a number of reference frames in the target playback stream is T, and a first video frame in the target playback stream is not an I-frame, where T is an integer greater than 1, and S is an integer greater than or equal to 2 and less than or equal to T.

Optionally, the decoding the target IP frame group and the target playback stream includes:
decoding a first P-frame in the target playback stream with reference to a P-frame in the target IP frame group, and decoding the P-frame in the target IP frame group with reference to an I-frame in the target IP frame group, when the target playback stream includes a bidirectionally predictive coded picture B-frame, a number of reference frames in the target playback stream is 1, and a first video frame in the target playback stream is not an I-frame.

Optionally, the decoding the target IP frame group and the target playback stream includes:
decoding a first P-frame in the target playback stream with reference to a first P-frame to an X^{th} P-frame in the target IP frame group, decoding a Y^{th} P-frame in the target IP frame group with reference to first Y-1 P-frames in the target IP frame group and an I-frame in the target IP frame group, and decoding the first P-frame in the target IP frame group with reference to the I-frame in the target IP frame group, when the target playback stream includes a bidirectionally predictive coded picture B-frame, a number of reference frames in the target playback stream is X, and a first video frame in the target playback stream is not an I-frame, where X is an integer greater than 1, and Y is an integer greater than or equal to 2 and less than or equal to X.

The video processing apparatus in this embodiment of the present disclosure may implement the above processes of the video processing method embodiment applied to the second terminal device, and achieve the same effects and functions. Details are not repeated herein.

An embodiment of the present disclosure further provides an electronic device. FIG. 12 is a schematic structural diagram of an electronic device according to an embodiment of the present disclosure. As shown in FIG. 12, the electronic device may vary greatly depending on configurations or performance, and may include one or more processors 1201 and memories 1202. The memory 1202 may store one or more applications or data. The memory 1202 may be a temporary storage or a persistent storage. The applications stored in the memory 1202 may include one or more modules (not shown in the figure), and each module may include a set of computer-executable instructions in the electronic device. Still further, the processor 1201 may be configured to communicate with the memory 1202 and execute, on the electronic device, the set of computer-executable instructions in the memory 1202. The electronic device may further include one or more power supplies 1203, one or more wired or wireless network interfaces 1204, one or more input or output interfaces 1205, one or more keyboards 1206, etc.

In a specific embodiment, the electronic device includes: a processor; and a memory configured to store computer-executable instructions that, when executed, cause the processor to implement the following procedures:
generating, by a first terminal device, a first video stream and a second video stream based on a video captured by the first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream; and
sending the first video stream and the second video stream to a server.

The electronic device in this embodiment of the present disclosure may implement the above processes of the video processing method embodiment applied to the first terminal device, and achieve the same effects and functions. Details are not repeated herein.

In another specific embodiment, the electronic device includes: a processor; and a memory configured to store computer-executable instructions that, when executed, cause the processor to implement the following procedures:
generating a first video stream and a second video stream based on a video captured by a first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream.

The electronic device in this embodiment of the present disclosure may implement the above processes of the video processing method embodiment applied to the server, and achieve the same effects and functions. Details are not repeated herein.

In another specific embodiment, the electronic device includes: a processor; and a memory configured to store computer-executable instructions that, when executed, cause the processor to implement the following procedures:
sending a live streaming data push request to a server;
receiving a target IP frame group and a target playback stream from the server, where the target IP frame group is an IP frame group in a second video stream, where the decode time stamp DTS of the IP frame group is before reception time of the live streaming data push request, and a time interval between the DTS and the reception time is within preset duration; and the target playback stream includes video frames in a first video stream that are located after a last predictive coded picture P-frame in the target IP frame group and that start from a P-frame; and
decoding the target IP frame group and the target playback stream.

The electronic device in this embodiment of the present disclosure may implement the above processes of the video processing method embodiment applied to the second terminal device, and achieve the same effects and functions. Details are not repeated herein.

Another embodiment of the present disclosure further provides a computer-readable storage medium for storing computer-executable instructions that, when executed by a processor, cause the following procedures to be implemented:
generating, by a first terminal device, a first video stream and a second video stream based on a video captured by the first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream; and
sending the first video stream and the second video stream to a server.

The storage medium in this embodiment of the present disclosure may implement the above processes of the video processing method embodiment applied to the first terminal device, and achieve the same effects and functions. Details are not repeated herein.

Another embodiment of the present disclosure further provides a computer-readable storage medium for storing computer-executable instructions that, when executed by a processor, cause the following procedures to be implemented:
generating a first video stream and a second video stream based on a video captured by a first terminal device, where the first video stream includes a plurality of consecutive GOPs, and the second video stream includes a plurality of intra coded picture and predictive coded picture IP frame groups spaced apart at an interval of a specific number of video frames; each GOP of the first video stream corresponds to one or more IP frame groups of the second video stream; each IP frame group includes an intra coded picture I-frame and a predictive coded picture P-frame after the I-frame; each video frame in each IP frame group has same picture content as a video frame in the first video stream that has a same decode time stamp DTS; and a number of the P-frames included in each IP frame group is the same as a number of reference frames for P-frames in the first video stream.

The storage medium in this embodiment of the present disclosure may implement the above processes of the video processing method embodiment applied to the server, and achieve the same effects and functions. Details are not repeated herein.

Another embodiment of the present disclosure further provides a computer-readable storage medium for storing computer-executable instructions that, when executed by a processor, cause the following procedures to be implemented:
sending a live streaming data push request to a server;
receiving a target IP frame group and a target playback stream from the server, where the target IP frame group is an IP frame group in a second video stream, where the decode time stamp DTS of the IP frame group is before reception time of the live streaming data push request, and a time interval between the DTS and the reception time is within preset duration; and the target playback stream includes video frames in a first video stream that are located after a last predictive coded picture P-frame in the target IP frame group and that start from a P-frame; and
decoding the target IP frame group and the target playback stream.

The storage medium in this embodiment of the present disclosure may implement the above processes of the video processing method embodiment applied to the second terminal device, and achieve the same effects and functions. Details are not repeated herein.

In various embodiments of the present disclosure, the computer-readable storage medium includes a read-only memory (ROM), a random-access memory (RAM), a magnetic disk, or an optical disc, etc.

In the 1990s, improvements to a technique can be clearly distinguished between hardware improvements (e.g., improvements to a circuit structure such as a diode, a transistor, and a switch) and software improvements (improvements to a method flow). However, with the development of technologies, currently, improvements to many procedures of methods may be regarded as direct improvements to hardware circuit structures. Almost all of the designers program an improved procedure of a method into a hardware circuit to obtain a corresponding hardware circuit structure. Therefore, it cannot be said that the improvement to a procedure of a method cannot be implemented by a hardware entity module. For example, a programmable logic device (PLD) (e.g., a field programmable gate array (FPGA)) is an integrated circuit, a logic function of which is determined by a user by programming the device. Designers perform programming by themselves to "integrate" a digital system onto a PLD without having to ask for a chip manufacturer to design and fabricate a specialized integrated circuit chip. Moreover, nowadays, instead of manually fabricating the integrated circuit chip, such programming is mostly implemented by using "logic compiler" software, which is similar to a software compiler used for program development and writing. Further, the original code before complication needs to be written in a specific programming language, which is called hardware description language (HDL). There are a plurality of HDLs, not just one, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). Currently, the most commonly used HDLs are Very-High-Speed Integrated Circuit Hardware Description Language (VHDL) and Verilog. It shall also be understood by those skilled in the art that, a hardware circuit for implementing a logical procedure of a method can be easily obtained by simply logically programming the procedure of the method in the hardware description languages described above into an integrated circuit.

A controller may be implemented in any appropriate manner. For example, the controller may take the form of, for example, a microprocessor or a processor and a computer-readable medium storing computer-readable program code (such as software or firmware) executable by the (micro)processor, a logic gate, a switch, an application specific integrated circuit (ASIC), a programmable logic controller, and an embedded microcontroller. Examples of the controller include, but are not limited to, the following microcontrollers: ARC 625D, Atmel AT91SAM, Microchip PIC18F26K20 and Silicone Labs C8051F320. Further, a memory controller may be implemented as part of a control logic of the memory. It shall also be known by those skilled in the art that, in addition to implementing the controller solely in the form of computer-readable program code, it is absolutely possible to logically program the method steps to enable the controller to achieve the same functions in the form of a logic gate, a switch, an application specific integrated circuit, a programmable logic controller, an embedded microcontroller, etc. Therefore, such a controller can be regarded as a hardware component, and means included in the controller and used for implementing various functions may correspondingly be regarded as structures in the hardware component, or the means for implementing various functions may even be regarded as both software modules for implementing the method and structures in the hardware component.

Specifically, the systems, apparatuses, modules, or units set forth in the above embodiments may be implemented by a computer chip or entity, or may be implemented by a product with a certain function. A typical device for the implementation is a computer. Specifically, the computer may be, for example, a personal computer, a laptop computer, a cellular phone, a camera phone, a smart phone, a personal digital assistant, a media player, a navigation device, an e-mail device, a game console, a tablet computer, a wearable device, or a combination of any of these devices.

For ease of description, when described, the above apparatus is divided into various units based on functions. Certainly, functions of the units may be implemented in one or more pieces of software and/or hardware when the embodiments of the present disclosure are implemented.

It shall be understood by those skilled in the art that the one or more embodiments of the present disclosure may be provided as methods, systems, or computer program products. Thus, the one or more embodiments of the present disclosure may take the form of full hardware embodiments, full software embodiments, or embodiments with a combination of software and hardware. Furthermore, the one or more embodiments of the present disclosure may take the form of a computer program product that is implemented on one or more computer-usable storage media (including, but not limited to, a disk memory, a CD-ROM, an optical memory, etc.) that include computer-usable program code.

The present disclosure is described with reference to the flowcharts and/or the block diagrams of the method, the device (system), and the computer program product according to the embodiments of the present disclosure. It should be understood that each procedure and/or block in the flowcharts and/or block diagrams, and a combination of procedures and/or blocks in the flowcharts and/or block diagrams may be implemented by computer program instructions. These computer program instructions may be provided to a processor of a general-purpose computer, a special-purpose computer, an embedded processor or other programmable data processing devices to create a machine, such that the instructions executed by the processor of the computer or other programmable data processing devices create means for implementing functions specified in one or more procedures in the flowcharts and/or one or more blocks in the block diagrams.

These computer program instructions may also be stored in a computer-readable memory that may direct the computer or other programmable data processing devices to operate in a specific manner, such that the instructions stored in the computer-readable memory create an article of manufacture including instruction means, and the instruction means implements the functions specified in one or more procedures in the flowcharts and/or one or more blocks in the block diagrams.

These computer program instructions may also be loaded onto the computer or other programmable data processing devices, such that a series of operation steps are executed on the computer or other programmable devices to perform computer-implemented processing, and thus the instructions executed on the computer or other programmable devices provide steps for implementing the functions specified in one or more procedures in the flowcharts and/or one or more blocks in the block diagrams.

It should also be noted that, the terms "comprise", "include", or their any other variants are intended to cover a non-exclusive inclusion, so that a process, a method, a commodity, or a device that includes a list of elements not only includes those elements but also includes other elements which are not expressly listed, or further includes elements inherent to such a process, method, commodity, or device. In the absence of more restrictions, an element defined by "including a ..." does not exclude another identical element in a process, method, commodity, or device that includes the element.

The one or more embodiments of the present disclosure may be described in a general context of a computer-executable instruction executed by a computer, for example, a program module. Generally, the program module includes a routine, a program, an object, a component, a data structure, etc., that performs a particular task or implements a particular abstract data type. The one or more embodiments of the present disclosure may also be practiced in distributed computing environments where a task is performed by a remote processing device that is connected over a communication network. In the distributed computing environments, the program module may be located in local and remote computer storage media, including a storage device.

All embodiments in the present disclosure are described in a progressive way, each embodiment focuses on the differences from the other embodiments, and reference may be made to each other for the same and similar parts among the embodiments. In particular, the system embodiment is substantially similar to the method embodiment, and is thus described in a simple manner, and for a related part, reference may be made to the part of the descriptions of the method embodiment.

The above description is only embodiments of the present disclosure, and is not intended to limit the present disclosure. For those skilled in the art, various variations and changes may be made to the present disclosure. Any modifications, equivalent substitutions, improvements, etc. made within the spirit and principle of the present disclosure shall be included within the scope of the claims of the present disclosure.

## Claims

1. A video processing method, comprising:
generating, by a first terminal device, a first video stream and a second video stream based on a video captured by the first terminal device, wherein the first video stream comprises a plurality of consecutive GOPs, and the second video stream comprises a plurality of intra coded picture and predictive coded picture IP frame groups spaced apart at an interval of a specific number of video frames; each GOP of the first video stream corresponds to one or more IP frame groups of the second video stream; each IP frame group comprises an intra coded picture I-frame and a predictive coded picture P-frame after the I-frame; each video frame in each IP frame group has same picture content as a video frame in the first video stream that has a same decode time stamp DTS; and a number of the P-frames comprised in each IP frame group is the same as a number of reference frames for P-frames in the first video stream; and
sending the first video stream and the second video stream to a server.

2. The method according to claim 1, wherein
in response to the first video stream not comprising a bidirectionally predictive coded picture B-frame, the I-frame in the IP frame group has same picture content as a P-frame in the first video stream that has a same decode time stamp DTS, the P-frame in the IP frame group has same picture content as a P-frame in the first video stream that has a same decode time stamp DTS, and all video frames in the IP frame group are arranged consecutively.

3. The method according to claim 1, wherein
in response to the first video stream comprising a bidirectionally predictive coded picture B-frame, the I-frame in the IP frame group has same picture content as a P-frame in the first video stream that has a same decode time stamp DTS, the P-frame in the IP frame group has same picture content as a P-frame in the first video stream that has a same decode time stamp DTS, and an interval between two adjacent video frames in the IP frame group is N frames; and N is a number of B-frames between two adjacent P-frames in the first video stream.

4. The method according to any of claims 1 to 3, wherein
in response to a number of reference frames for P-frames in the first video stream being 1, the IP frame group comprises one I-frame and one P-frame.

5. The method according to any of claims 1 to 3, wherein
in response to a number of reference frames for P-frames in the first video stream being greater than 1, the IP frame group comprises one I-frame and a plurality of P-frames, and the number of the P-frames comprised in the IP frame group is the same as the number of the reference frames for the P-frames in the first video stream.

6. A video processing method, comprising:
generating a first video stream and a second video stream based on a video captured by a first terminal device, wherein the first video stream comprises a plurality of consecutive GOPs, and the second video stream comprises a plurality of intra coded picture and predictive coded picture IP frame groups spaced apart at an interval of a specific number of video frames; each GOP of the first video stream corresponds to one or more IP frame groups of the second video stream; each IP frame group comprises an intra coded picture I-frame and a predictive coded picture P-frame after the I-frame; each video frame in each IP frame group has same picture content as a video frame in the first video stream that has a same decode time stamp DTS; and a number of the P-frames comprised in each IP frame group is the same as a number of reference frames for P-frames in the first video stream.

7. The method according to claim 6, wherein the method further comprises:
receiving a live streaming data push request from a second terminal device; and
sending a target IP frame group and a target playback stream to the second terminal device in response to the live streaming data push request, wherein the target IP frame group is an IP frame group in the second video stream, wherein the DTS of the IP frame group is before reception time of the live streaming data push request, and a time interval between the DTS and the reception time is within preset duration; and the target playback stream comprises video frames in the first video stream that are located after a last P-frame in the target IP frame group and that start from a P-frame.

8. The method according to claim 7, wherein the target IP frame group is an IP frame group in the second video stream, wherein the DTS of the IP frame group is before the reception time and closest to the reception time.

9. The method according to claim 6, wherein
in response to the first video stream not comprising a bidirectionally predictive coded picture B-frame, the I-frame in the IP frame group has same picture content as a P-frame in the first video stream that has a same decode time stamp DTS, the P-frame in the IP frame group has same picture content as a P-frame in the first video stream that has a same decode time stamp DTS, and all video frames in the IP frame group are arranged consecutively.

10. The method according to claim 6, wherein
in response to the first video stream comprising a bidirectionally predictive coded picture B-frame, the I-frame in the IP frame group has same picture content as a P-frame in the first video stream that has a same decode time stamp DTS, the P-frame in the IP frame group has same picture content as a P-frame in the first video stream that has a same decode time stamp DTS, and an interval between two adjacent video frames in the IP frame group is M video frames; and M is a number of B-frames between two adjacent P frames in the first video stream.

11. The method according to any of claims 6 to 10, wherein
in response to a number of reference frames for P-frames in the first video stream being 1, the IP frame group comprises one I-frame and one P-frame.

12. The method according to any of claims 6 to 10, wherein
in response to a number of reference frames for P-frames in the first video stream being greater than 1, the IP frame group comprises one I-frame and a plurality of P-frames, and the number of the P-frames comprised in the IP frame group is the same as the number of the reference frames for the P-frames in the first video stream.

13. A video processing method, comprising:
sending a live streaming data push request to a server;
receiving a target IP frame group and a target playback stream from the server, wherein the target IP frame group is an IP frame group in a second video stream, wherein the decode time stamp DTS of the IP frame group is before reception time of the live streaming data push request, and a time interval between the DTS and the reception time is within preset duration; and the target playback stream comprises video frames in a first video stream that are located after a last predictive coded picture P-frame in the target IP frame group and that start from a P-frame; and
decoding the target IP frame group and the target playback stream.

14. The method according to claim 13, wherein the decoding the target IP frame group and the target playback stream comprises:
decoding a first P-frame in the target playback stream with reference to a P-frame in the target IP frame group, and decoding the P-frame in the target IP frame group with reference to an I-frame in the target IP frame group, in response to the target playback stream not comprising a bidirectionally predictive coded picture B-frame, a number of reference frames in the target playback stream being 1, and a first video frame in the target playback stream being not an I-frame.

15. The method according to claim 13, wherein the decoding the target IP frame group and the target playback stream comprises:
decoding a first P-frame in the target playback stream with reference to a first P-frame to a T^{th} P-frame in the target IP frame group, decoding an S^{th} P-frame in the target IP frame group with reference to first S-1 P-frames in the target IP frame group and an I-frame in the target IP frame group, and decoding a first P-frame in the target IP frame group with reference to the I-frame in the target IP frame group, in response to the target playback stream not comprising a bidirectionally predictive coded picture B-frame, a number of reference frames in the target playback stream being T, and a first video frame in the target playback stream being not an I-frame, wherein T is an integer greater than 1, and S is an integer greater than or equal to 2 and less than or equal to T.

16. The method according to claim 13, wherein the decoding the target IP frame group and the target playback stream comprises:
decoding a first P-frame in the target playback stream with reference to a P-frame in the target IP frame group, and decoding the P-frame in the target IP frame group with reference to an I-frame in the target IP frame group, in response to the target playback stream comprising a bidirectionally predictive coded picture B-frame, a number of reference frames in the target playback stream being 1, and a first video frame in the target playback stream being not an I-frame.

17. The method according to claim 13, wherein the decoding the target IP frame group and the target playback stream comprises:
decoding a first P-frame in the target playback stream with reference to a first P-frame to an X^{th} P-frame in the target IP frame group, decoding a Y^{th} P-frame in the target IP frame group with reference to first Y-1 P-frames in the target IP frame group and an I-frame in the target IP frame group, and decoding the first P-frame in the target IP frame group with reference to the I-frame in the target IP frame group, in response to the target playback stream comprising a bidirectionally predictive coded picture B-frame, a number of reference frames in the target playback stream being X, and a first video frame in the target playback stream being not an I-frame, wherein X is an integer greater than 1, and Y is an integer greater than or equal to 2 and less than or equal to X.

18. A video processing apparatus, comprising:
a first generation unit configured to generate, by a first terminal device, a first video stream and a second video stream based on a video captured by the first terminal device, wherein the first video stream comprises a plurality of consecutive GOPs, and the second video stream comprises a plurality of intra coded picture and predictive coded picture IP frame groups spaced apart at an interval of a specific number of video frames; each GOP of the first video stream corresponds to one or more IP frame groups of the second video stream; each IP frame group comprises an intra coded picture I-frame and a predictive coded picture P-frame after the I-frame; each video frame in each IP frame group has same picture content as a video frame in the first video stream that has a same decode time stamp DTS; and a number of the P-frames comprised in each IP frame group is the same as a number of reference frames for P-frames in the first video stream; and
a first sending unit configured to send the first video stream and the second video stream to a server.

19. A video processing apparatus, comprising:
a second generation unit configured to generate a first video stream and a second video stream based on a video captured by a first terminal device, wherein the first video stream comprises a plurality of consecutive GOPs, and the second video stream comprises a plurality of intra coded picture and predictive coded picture IP frame groups spaced apart at an interval of a specific number of video frames; each GOP of the first video stream corresponds to one or more IP frame groups of the second video stream; each IP frame group comprises an intra coded picture I-frame and a predictive coded picture P-frame after the I-frame; each video frame in each IP frame group has same picture content as a video frame in the first video stream that has a same decode time stamp DTS; and a number of the P-frames comprised in each IP frame group is the same as a number of reference frames for P-frames in the first video stream.

20. A video processing apparatus, comprising:
a request sending unit configured to send a live streaming data push request to a server;
a data receiving unit configured to receive a target IP frame group and a target playback stream from the server, wherein the target IP frame group is an IP frame group in a second video stream, wherein the decode time stamp DTS of the IP frame group is before reception time of the live streaming data push request, and a time interval between the DTS and the reception time is within preset duration; and the target playback stream comprises video frames in a first video stream that are located after a last predictive coded picture P-frame in the target IP frame group and that start from a P-frame; and
a data decoding unit configured to decode the target IP frame group and the target playback stream.

21. An electronic device, comprising:
a processor; and
a memory configured to store computer-executable instructions that, when executed, cause the processor to implement the steps of the method according to any of claims 1 to 5.

22. An electronic device, comprising:
a processor; and
a memory configured to store computer-executable instructions that, when executed, cause the processor to implement the steps of the method according to any of claims 6 to 12.

23. An electronic device, comprising:
a processor; and
a memory configured to store computer-executable instructions that, when executed, cause the processor to implement the steps of the method according to any of claims 13 to 17.

24. A computer-readable storage medium, for storing computer-executable instructions that, when executed by a processor, cause the steps of the method according to any of claims 1 to 5 to be implemented.

25. A computer-readable storage medium, for storing computer-executable instructions that, when executed by a processor, cause the steps of the method according to any of claims 6 to 12 to be implemented.

26. A computer-readable storage medium, for storing computer-executable instructions that, when executed by a processor, cause the steps of the method according to any of claims 13 to 17 to be implemented.
